# EUROPEAN PATENT APPLICATION

(11) **EP 4 773 574 A1**
(43) Date of publication of application: **08.07.2026**
(21) Application number: 24945380.4
(22) Date of filing: 17.12.2024
(51) Int. Cl.: H04L 65/1069

(54) **CALL METHOD AND TERMINAL DEVICE**

(30) Priority: 19.06.2024 CN 202410799406
(71) Applicant: HUAWEI TECHNOLOGIES CO., LTD., Shenzhen 518129 (CN)
(72) Inventor: ZHAO, Xiaolei, Shenzhen, Guangdong 518129 (CN); LI, Yibing, Shenzhen, Guangdong 518129 (CN); ZHAO, Yingqian, Shenzhen, Guangdong 518129 (CN)
(74) Representative: Maiwald GmbH
(86) International application number: PCT/CN2024/140070
(87) International publication number: WO 2025/260655

(57) **Abstract**

A call method and a terminal device relating to the field of terminal technologies are provided, which constrain behavior of a VoIP application after a push end receives a call message and wakes up a main process of the VoIP application, thereby solving a problem of increasing overall power consumption and memory occupation caused by abuse of VoIP messages. The method includes: installing a first application having a VoIP call function on the terminal device; when the first application is not running in a foreground of the terminal device, waking up, by the terminal device, a main process of the first application, and sending, to the first application, a first call message received through a push channel, where the first call message is used to implement a first VoIP call; and when the first application does not execute a first incoming call alert within preset duration in response to the first call message, keeping, by the terminal device, a main process of the first application alive within the preset duration, where the first incoming call alert is used to output a first incoming call notification message for prompting a user.

## Description

This application claims priority to Chinese Patent Application No. 202410799406.4, filed with the China National Intellectual Property Administration on June 19, 2024 and entitled "CALL METHOD AND TERMINAL DEVICE", which is incorporated herein by reference in its entirety.

### TECHNICAL FIELD

This application relates to the field of terminal technologies, and in particular, to a call method and a terminal device.

### BACKGROUND

Currently, some applications (applications, APPs) can implement calls using a voice over internet protocol (internet protocol, IP) (voice over internet protocol, VoIP) technology. Such applications may be briefly referred to as VoIP applications. When the VoIP application is running in the background of a device, the device may freeze or destroy a process of the VoIP application to reduce overall power consumption. In this case, to implement a call of the VoIP application, a server may deliver a call message to a push end through a push (Push) channel. Then, after receiving the call message, the push end directly wakes up a main process of the VoIP application to deliver the call message. Subsequently, the VoIP application may handle operations such as process keep-alive and incoming call interface display within the main process of the VoIP application. In this solution, the VoIP application may perform behavior unrelated to a VoIP call during a process keep-alive period, leading to misuse of VoIP messages and consequently increasing overall power consumption and memory occupation.

### SUMMARY

This application provides a call method and a terminal device, which can constrain behavior of a VoIP application after a push end receives a call message and wakes up a main process of the VoIP application, thereby solving a problem of increasing overall power consumption and memory occupation caused by abuse of VoIP messages.

To achieve the foregoing objective, the following technical solutions are used in this application.

According to a first aspect, a call method is provided, applied to a terminal device. A first application having a VoIP call function is installed on the terminal device. The method includes: When the first application is not running in a foreground of the terminal device, the terminal device wakes up a main process of the first application, and sends, to the first application, a first call message received through a push channel. The first call message is used to implement a first VoIP call. When the first application does not execute a first incoming call alert within preset duration in response to the first call message, the terminal device keeps the main process of the first application alive within the preset duration. The first incoming call alert is used to output a first incoming call notification message for prompting a user.

Based on the foregoing technical solution, when the application having the VoIP call function is not running in the foreground of the terminal device, the terminal device may wake up the main process of the application, and send, to the application, the call message that is received through the push channel and that is used to implement the VoIP call. After the application receives the call message, if the incoming call alert used to output the incoming call notification message for prompting the user is not executed within the preset duration, the terminal device keeps the main process of the application alive within the preset duration. In this way, after the call message reaches a terminal side and the main process of the VoIP application is woken up, if the VoIP application does not make an incoming call alert within the preset duration, the terminal device keeps the main process of the VoIP application alive only within the preset duration, that is, keeps the main process of the VoIP application alive only within a period of time. This can constrain behavior of the VoIP application, thereby solving a problem of increasing overall power consumption and memory occupation caused by abuse of VoIP messages.

In a possible design, that the terminal device keeps the main process of the first application alive within the preset duration includes: The terminal device keeps the main process of the first application alive within the preset duration; and at a moment that meets the preset duration, the terminal device freezes the main process of the first application. In this way, after the terminal device keeps the VoIP application alive within the preset duration following a moment of waking up the main process of the VoIP application, the terminal device freezes the main process of the VoIP application at a moment that meets the preset duration from the moment of waking up the main process of the VoIP application. In this way, if the VoIP application does not make an incoming call alert within the preset duration, the main process of the VoIP application is refrozen. This can not only constrain behavior of the VoIP application, but also lower a probability of increasing overall power consumption and memory occupation caused by abuse of VoIP messages. In addition, the main process of the application may further be woken up in a manner of refreezing, thereby solving a crash problem existing in the VoIP application.

In a possible design, the method further includes: The terminal device continues, when the first application executes the first incoming call alert within the preset duration in response to the first call message, to keep the main process of the first application alive after the preset duration. In this way, if the VoIP application makes an incoming call alert within the preset duration, the terminal device may continue to keep the main process of the VoIP application alive after the preset duration. In this way, it can be ensured that the VoIP application can be active normally and is not frozen in an incoming call process and an ongoing call process.

In a possible design, the terminal device includes a push end, and the push end is used to transmit a call message. That the terminal device wakes up the main process of the first application, and sends, to the first application, the first call message received through the push channel includes: The push end wakes up the main process of the first application, and sends, to the first application, the first call message received through the push channel. In this way, the terminal device may include the push end. When the VoIP application is not running in the foreground, the push end may receive the call message delivered through the push channel, so that the push end may wake up the VoIP application based on the call message, and deliver the call message. In this way, even if the VoIP application is not running in the foreground, the VoIP application can receive the call message, thereby ensuring normal call processing.

In a possible design, the terminal device further includes a process resource management service, and the process resource management service is used to keep alive and freeze the main process of the first application. That the terminal device keeps the main process of the first application alive within the preset duration includes: The push end sends a first request to the process resource management service. The first request indicates the process resource management service to keep the main process of the first application alive within the preset duration. The process resource management service keeps the main process of the first application alive within the preset duration in response to the first request. In this way, the terminal device further includes the process resource management service, and the push end requests the process resource management service to keep the VoIP application alive within the preset duration. In other words, the push end may serve as a proxy for the VoIP application to request to keep the main process of the VoIP application alive within the preset duration, and the VoIP application itself does not keep alive and freeze the main process. This can constrain behavior of the VoIP application, and lower a probability of increasing overall power consumption and memory occupation caused by abuse of VoIP messages.

In a possible design, that the push end sends the first request to the process resource management service includes: The push end sends a first keep-alive request to the process resource management service. The first keep-alive request indicates the process resource management service to keep the main process of the first application alive. The push end sends a first freeze request to the process resource management service at a moment that meets the preset duration. The first freeze request indicates the process resource management service to freeze the main process of the first application. That the process resource management service keeps the main process of the first application alive within the preset duration in response to the first request includes: The process resource management service keeps the main process of the first application alive within the preset duration in response to the first keep-alive request and the first freeze request.

In this way, the push end may first send the keep-alive request to the process resource management service, so that the main process of the VoIP application can be kept alive. Then, at a moment that meets the preset duration from the moment of waking up the main process of the VoIP application, the push end sends the freeze request to the process resource management service, so that the main process of the VoIP application is refrozen. This can constrain behavior of the VoIP application after the main process of the VoIP application is woken up, and lower a probability of increasing overall power consumption and memory occupation caused by abuse of VoIP messages. In addition, the main process of the application may further be woken up in a manner of refreezing, thereby solving a crash problem existing in the VoIP application.

In a possible design, the terminal device includes a push end, a process resource management service, and a VoIP management service, the push end is used to transmit a call message, the process resource management service is used to keep alive and freeze the main process of the first application, and the VoIP management service is used to receive an incoming call alert. That the terminal device continues, when the first application executes the first incoming call alert within the preset duration in response to the first call message, to keep the main process of the first application alive after the preset duration includes: The push end sends a first keep-alive request to the process resource management service. The first keep-alive request indicates the process resource management service to keep the main process of the first application alive. The process resource management service keeps the main process of the first application alive in response to the first keep-alive request. The first application executes the first incoming call alert to the VoIP management service within the preset duration in response to the first call message. The VoIP management service sends a second keep-alive request to the process resource management service in response to the first incoming call alert. The second keep-alive request indicates the process resource management service to keep the main process of the first application alive. The push end sends a first freeze request to the process resource management service at a moment that meets the preset duration. The first freeze request indicates the process resource management service to freeze the main process of the first application. The process resource management service continues to keep the main process of the first application alive within the preset duration and after the preset duration in response to the second keep-alive request and the first freeze request.

In this way, the push end serves as a proxy for the VoIP application and sends the keep-alive request to the process resource management service, so that the VoIP application is kept alive. If the VoIP application makes an incoming call alert to the VoIP management service within the preset duration, the VoIP management service may serve as a proxy for the VoIP application and send the keep-alive request to the process resource management service, so that the VoIP application continues to be kept alive. Thereafter, even if the push end serves as a proxy for the VoIP application, and sends the freeze request to the process resource management service again at a moment that meets the preset duration from the moment of waking up the main process of the VoIP application, the process resource management service can still continue to keep the main process of the VoIP application alive after the preset duration according to the keep-alive request of the VoIP management service. That is, the process resource management service may not respond to the freeze request of the push end. This can not only constrain behavior of the VoIP application after the main process of the VoIP application is woken up, but also lower a probability of increasing overall power consumption and memory occupation caused by abuse of VoIP messages. In addition, it can be ensured that the VoIP application can be active normally and is not frozen in an incoming call process and an ongoing call process, thereby ensuring normal progress of the call.

In a possible design, the terminal device further includes a notification display service, the notification display service is used to display an incoming call notification message of the first application. After the first application executes the first incoming call alert to the VoIP management service within the preset duration in response to the first call message, the method further includes: The VoIP management service sends the first incoming call notification message of the first application to the notification display service in response to the first incoming call alert. The notification display service displays the first incoming call notification message on the terminal device. In this way, when the VoIP application is not running in the foreground, the notification display service may replace the VoIP application to display the incoming call notification message.

In a possible design, the method further includes: When the first application is running in the foreground of the terminal device, the first application executes a second incoming call alert to the VoIP management service in response to a second call message received through a persistent connection. The VoIP management service sends a second incoming call notification message of the first application to the notification display service in response to the second incoming call alert. The notification display service displays the second incoming call notification message on the terminal device. In this way, when the VoIP application is running in the foreground, the notification display service may also display the incoming call notification message, thereby maintaining consistency with a case in which the VoIP application is not running in the foreground, and achieving a unified display entry.

In a possible design, the first incoming call notification message and the second incoming call notification message have a same style. In this way, display styles of the incoming call notification messages can be the same regardless of whether the VoIP application is running in the foreground or not, thereby achieving uniformity of the display styles.

In a possible design, the first incoming call notification message and the second incoming call notification message are not displayed in full screen, and both the first incoming call notification message and the second incoming call notification message include caller information, an answer key, and a reject key. In this way, the incoming call notification messages are non-full-screen notification messages, and the incoming call notification message directly includes the caller information, the answer key, and the reject key. This can not only enable differentiation from an incoming call of a conventional native system, thereby solving a problem of easily misleading the user, but also improve connection efficiency.

In a possible design, the first incoming call notification message is displayed on a lock screen interface of the terminal device with a lock screen password set, and the first incoming call notification message supports the user in answering an incoming call of the first application without unlocking the terminal device. In this way, the incoming call notification message may be directly displayed on the lock screen interface with the lock screen password set, and the user can answer the call through the incoming call notification message without unlocking the terminal device, thereby implementing answering without unlocking, and improving connection efficiency.

In a possible design, the method further includes: The notification display service displays a prompt message in a status bar of the terminal device. The prompt message is used to prompt that an incoming call type corresponding to the first incoming call notification message is a VoIP incoming call. In this way, the notification display service may display, in the status bar of the terminal device, the prompt message used to prompt that the incoming call is the VoIP incoming call, to implement a strong prompt for the VoIP incoming call. In addition, the prompt message is located in the status bar, and is not affected by whether the VoIP application is running in the foreground or in the background.

According to a second aspect, a call method is provided, applied to a terminal device. A first application having a VoIP call function is installed on the terminal device. The method includes: The terminal device displays a first interface. The first interface is a lock screen interface with a lock screen password set, a first incoming call notification message of the first application is displayed on the first interface, the first incoming call notification message occupies a part of an area of the first interface, and the first incoming call notification message includes a first answer key. The terminal device receives a trigger operation on the first answer key. In response to the trigger operation, the terminal device connects, when the terminal device is not unlocked, a first VoIP call corresponding to the first incoming call notification message.

Based on the foregoing technical solution, the terminal device may display the lock screen interface with the lock screen password set, and the incoming call notification message of the VoIP application that occupies a part of an area is displayed on the interface. That is, an incoming call of the VoIP application is a non-full-screen incoming call. This allows differentiation from an incoming call notification interface of a native call, thereby avoiding misleading the user. In addition, the incoming call notification message includes an answer key, and when the terminal device receives a trigger operation for the answer key, the VoIP call corresponding to the incoming call notification message may be connected when the terminal device is not unlocked. In this way, answering without unlocking can be implemented, and connection efficiency is improved.

In a possible design, the first incoming call notification message is an incoming voice call notification message or an incoming video call notification message, and the first VoIP call is a voice call. In this way, the incoming call notification message is an incoming video call or an incoming voice call, and a voice call is implemented after unlocking. In other words, answering the voice call without unlocking can be implemented, thereby enabling quick answering of the voice call.

In a possible design, the first incoming call notification message is an incoming video call notification message, the first incoming call notification message further includes a second answer key, and the method further includes: The terminal device receives a trigger operation on the second answer key. The terminal device prompts, in response to the trigger operation on the second answer key, a user to unlock the terminal device. The terminal device connects, when the terminal device is successfully unlocked, a second VoIP call corresponding to the first incoming call notification message. The second VoIP call is a video call. In this way, when the incoming video call notification message is received, the video call can be performed only after the user unlocks the terminal device, which can ensure privacy of the video call.

In a possible design, after the terminal device connects the first VoIP call corresponding to the first incoming call notification message, the method further includes: The terminal device receives an unlock operation on the terminal device. The terminal device displays a second interface and a first prompt message in response to the unlock operation. The second interface is an interface last displayed before the terminal device locks a screen, the first prompt message is located in a status bar, and the first prompt message is used to prompt that an incoming call type of the first VoIP call is a VoIP incoming call and/or prompt a progress of the first VoIP call. In this way, after receiving the unlock operation, the terminal device may unlock the device, and display the interface last displayed before the screen is locked and display the prompt message in the status bar, that is, no longer display the incoming call notification message, to avoid blocking the user interface. The prompt message may be used to prompt that the incoming call type is the VoIP call, prompt the progress of the VoIP call, or the like, so that the prompt message is not affected by whether the VoIP application is running in the foreground or not running in the background.

In a possible design, after the terminal device displays the second interface and the first prompt message, the method further includes: The terminal device receives a trigger operation on the first prompt message. The terminal device displays a third interface and the first prompt message in response to the trigger operation. The third interface is a voice call interface displayed in full screen. In this way, the user may further perform an operation on the first prompt message, to present a full-screen voice call interface. In other words, the first prompt message supports the user operation, thereby improving user experience.

In a possible design, after the terminal device connects the first VoIP call corresponding to the first incoming call notification message, the method further includes: The terminal device receives a trigger operation on the first incoming call notification message. In response to the trigger operation on the first incoming call notification message, the terminal device prompts the user to unlock the terminal device. The terminal device displays the third interface and the first prompt message when the terminal device is successfully unlocked. The third interface is a full-screen voice call interface, the first prompt message is located in the status bar, and the first prompt message is used to prompt that the incoming call type of the first VoIP call is the VoIP incoming call and/or prompt the progress of the first VoIP call.

In this way, the incoming call notification message displayed on the lock screen interface after the call is connected may be converted into a full-screen call interface. When the terminal device displays the full-screen call interface, the VoIP application is running in the foreground. In this scenario, the first prompt message in the status bar is still displayed. In other words, manners of prompting the call progress are consistent whether the VoIP is running in the foreground or in the background, thereby improving user experience.

In a possible design, the method further includes: The terminal device displays a fourth interface. The fourth interface is a running interface of the first application, a second incoming call notification message of the first application is displayed on the fourth interface, and the second incoming call notification message is displayed in a notification center. In this way, when the terminal device displays the running interface of the VoIP application, the terminal device is running in the foreground. In this case, the received incoming call notification message may be displayed in the notification center, that is, the incoming call notification message is not displayed by the VoIP application itself, so that manners of displaying the incoming call notification message may be consistent whether the VoIP application is running in the foreground or not.

According to a third aspect, a terminal device is provided. The terminal device has a function of implementing the method according to the first aspect and any design of the first aspect. The function may be implemented by hardware, or may be implemented by hardware executing corresponding software. The hardware or the software includes one or more modules corresponding to the function.

According to a fourth aspect, a terminal device is provided, including a processor and a memory. The memory is coupled to the processor. The memory is configured to store computer program code. The computer program code includes computer instructions. When the processor reads the computer instructions from the memory, the terminal device is enabled to perform the method according to the first aspect or the second aspect, and any design of the first aspect or the second aspect. Optionally, the memory may be coupled to the processor, or may be independent of the memory.

In a possible design, the terminal device further includes a display, and the display may be used by the terminal device to perform a display operation.

In a possible design, the terminal device further includes a communication interface, and the communication interface may be used by the terminal device to communicate with another apparatus (for example, a server). For example, the communication interface may be a transceiver, an input/output interface, an interface circuit, an output circuit, an input circuit, a pin, a related circuit, or the like.

According to a fifth aspect, a computer-readable storage medium is provided. The computer-readable storage medium includes a computer program. When the computer program is run on a terminal device, the terminal device is enabled to perform the method according to the first aspect or the second aspect, and any design of the first aspect or the second aspect.

According to a sixth aspect, a computer program product is provided. The computer program product includes a computer program or instructions. When the computer program or the instructions are run on a computer, the computer is enabled to perform the method according to the first aspect or the second aspect, and any design of the first aspect or the second aspect.

According to a seventh aspect, a chip system is provided. The chip system includes at least one processor and at least one interface circuit, and the at least one interface circuit is configured to: perform a transceiver function, and send instructions to the at least one processor; and when the at least one processor executes the instructions, the at least one processor is enabled to perform the method according to any design of the first aspect or the second aspect.

According to an eighth aspect, a communication system is provided, including a terminal device and a server. The terminal device and the server cooperate to implement the method according to any design of any one of the foregoing aspects. Optionally, the server may include at least one of a push server and an application server.

It should be noted that, for technical effects brought by any design of the third aspect to the eighth aspect, refer to the technical effects brought by a corresponding design of the first aspect or the second aspect. Details are not described herein again.

### BRIEF DESCRIPTION OF DRAWINGS

FIG. 1 is a diagram of a process of a call method according to an embodiment of this application;
FIG. 2 is a diagram of a process of another call method according to an embodiment of this application;
FIG. 3(1) to FIG. 3(3) are a diagram 1 of interfaces according to an embodiment of this application;
FIG. 4 is a diagram of a process of another call method according to an embodiment of this application;
FIG. 5(1) and FIG. 5(2) are a diagram 2 of interfaces according to an embodiment of this application;
FIG. 6(1) and FIG. 6(2) are a diagram 3 of interfaces according to an embodiment of this application;
FIG. 7 is a diagram of an architecture of a communication system according to an embodiment of this application;
FIG. 8 is a diagram of a structure of a terminal device according to an embodiment of this application;
FIG. 9 is a diagram of a software structure of a terminal device according to an embodiment of this application;
FIG. 10A and FIG. 10B are a schematic flowchart of a call method according to an embodiment of this application;
FIG. 11(1) to FIG. 11(3) are a diagram 4 of interfaces according to an embodiment of this application;
FIG. 12(1) to FIG. 12(4) are a diagram 5 of interfaces according to an embodiment of this application;
FIG. 13 is a diagram of an answering procedure according to an embodiment of this application;
FIG. 14(1) to FIG. 14(4) are a diagram 6 of interfaces according to an embodiment of this application;
FIG. 15(1) to FIG. 15(3) are a diagram 7 of interfaces according to an embodiment of this application;
FIG. 16 is a diagram of a rejecting procedure according to an embodiment of this application;
FIG. 17 is a schematic flowchart of another call method according to an embodiment of this application;
FIG. 18(1) and FIG. 18(2) are a diagram 8 of interfaces according to an embodiment of this application;
FIG. 19 is a schematic flowchart of another call method according to an embodiment of this application;
FIG. 20 is a diagram of a structure of another terminal device according to an embodiment of this application; and
FIG. 21 is a diagram of a structure of a chip system according to an embodiment of this application.

### DESCRIPTION OF EMBODIMENTS

In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate three cases: Only A exists, both A and B exist, or only B exists, where A and B may be singular or plural.

In addition, in the descriptions of this application, "a plurality of" means two or more than two unless otherwise specified. "At least one of the following" or a similar expression thereof indicates any combination of these items, including a single item or any combination of a plurality of items. For example, at least one of a, b, or c may represent: a, b, c, a and b, a and c, b and c, and a and b and c, where a, b, and c may be singular or plural.

In addition, to clearly describe the technical solutions in embodiments of this application, terms such as "first" and "second" are used in embodiments of this application to distinguish between same items or similar items having basically same functions or purposes. A person skilled in the art may understand that the terms such as "first" and "second" do not limit a quantity or an execution sequence, and the terms such as "first" and "second" do not indicate a definite difference.

VoIP (also referred to as IP telephony, Internet telephony, broadband telephony, or the like) is a voice call technology that implements a call over the Internet. In one scenario, an application that implements a call using a VoIP technology (briefly referred to as a VoIP application below, for example, including but not limited to a social application, a conferencing application, or a video application) runs in a foreground of a device. To implement a call, the VoIP application may perform call establishment with a server for the call by creating a persistent connection within a process of the VoIP application, and receive a call message (or referred to as a VoIP call message, a call request message, or the like) from the server through the persistent connection. It may be understood that, in embodiments of this application, the call message may be a call request message sent by a calling party. The persistent connection is a communication mode in which, after a client and a server establish a connection and complete communication, the connection is not actively terminated but remains open.

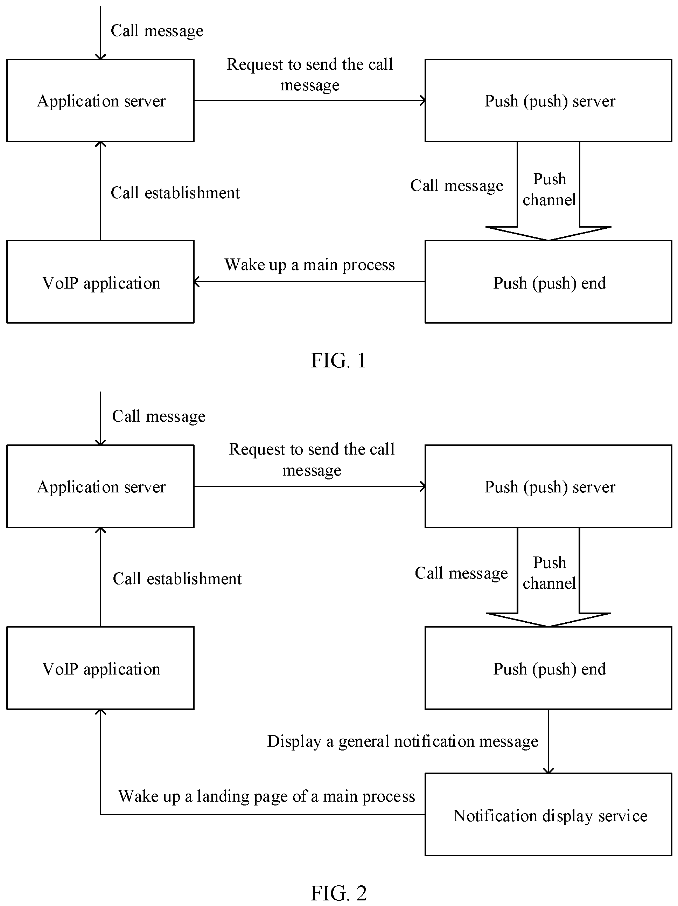

In another scenario, when the VoIP application is running in the foreground of the device, the call message needs to be delivered through a push channel to implement the call. In this scenario, FIG. 1 is a diagram of a process of a call method according to an embodiment of this application. As shown in FIG. 1, after receiving a call message sent by a calling party, an application server requests a push server to send the call message. Then, the push server delivers the call message through the push channel to a push end installed on the terminal device serving as a called party. The push end may be a client responsible for receiving and processing a push message. Correspondingly, after receiving the call message, the push end directly wakes up (also referred to as invoking) a main process of a VoIP application, and delivers the call message to the VoIP application. Finally, the VoIP application performs call establishment (or described as establishing a call connection) with the application server within the main process, and may start a call with the calling party after a user answers.

In this solution, after delivering the call message to the VoIP application, the push end does not perform any management and control on the application, and the VoIP application handles operations such as process keep-alive and incoming call interface display within the main process of the VoIP application. In this way, behavior of the VoIP application after the main process is woken up cannot be constrained, and the VoIP application may perform behavior unrelated to a VoIP call during a process keep-alive period, leading to misuse of VoIP messages and consequently increasing overall power consumption and memory occupation.

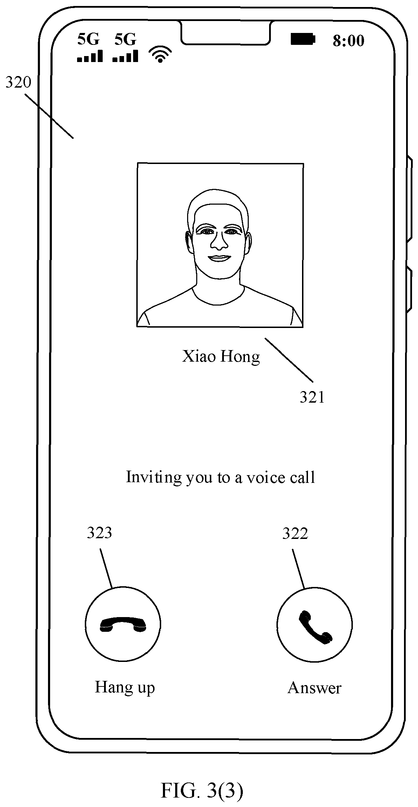

In this scenario, for example, FIG. 2 is a diagram of a process of another call method according to an embodiment of this application. As shown in FIG. 2, after receiving a call message sent by a calling party, an application server requests a push server to send the call message. Then, the push server delivers the call message through a push channel to a push end installed on the terminal device serving as a called party. After receiving the call message, the push end can serve as a proxy for a VoIP application, replacing the VoIP application in interfacing with a notification display service to display a general notification message. After the user performs an open operation such as tapping on the general notification message, the notification display service wakes up a main process landing page of the VoIP application in response to the operation. It may be understood that the landing page may be an application interface accessed through opening the general notification message, for example, an incoming call interface 320 shown in FIG. 3(3) in the following. Finally, the VoIP application performs call establishment with the application server within the main process, and may start a call with the calling party after the user answers.

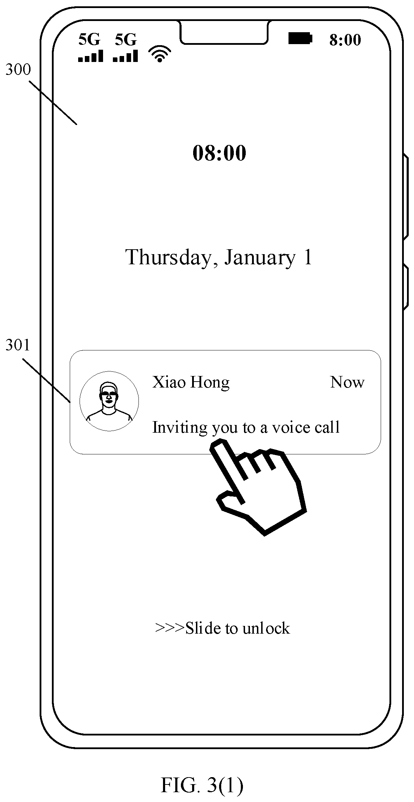

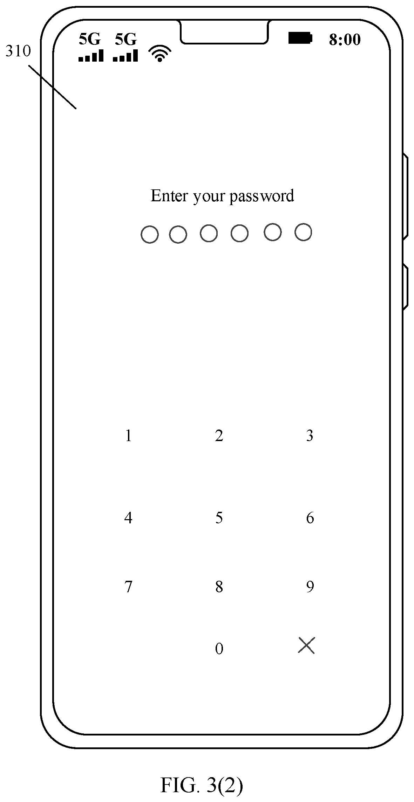

In a lock screen scenario, when an operation of opening the general notification message performed by the user is detected, device unlocking is first triggered. For example, the device is a mobile phone, and a push application is an application in the mobile phone. FIG. 3(1) to FIG. 3(3) are a diagram of interfaces according to an embodiment of this application. As shown in FIG. 3(1), the mobile phone displays a lock screen interface 300. A general notification message 301 is displayed on the lock screen interface 300, and the general notification message 301 is a general notification message displayed by a notification display service. An answer key, a reject key, and the like are not displayed in the general notification message 301, and the foregoing keys can be presented only by opening the general notification message 301. For example, if the mobile phone detects an open operation such as tapping the general notification message 301 by the user, unlocking of the mobile phone is first triggered in response to the operation. An unlocking manner may include but is not limited to a face, a fingerprint, a password, or the like. The password is used as an example. The mobile phone may present an unlock interface 310 as shown in FIG. 3(2). After the user enters an unlocking password of the mobile phone on the unlock interface 310, the mobile phone is successfully unlocked. Meanwhile, the mobile phone may present an incoming call interface 320 as shown in FIG. 3(3). The incoming call interface 320 includes caller information 321 (such as a profile picture and a name), an answer key 322, a reject key 323, and the like.

In this solution, the user needs to perform a plurality of operations such as opening the general notification message, unlocking the device, and tapping the answer key to complete answering. Such operations are cumbersome and result in low connection efficiency. In addition, in this solution, because the main process of the VoIP application performs call establishment with the application server only after the user performs the open operation on the general notification message, an answer delay is prolonged, leading to poor user experience.

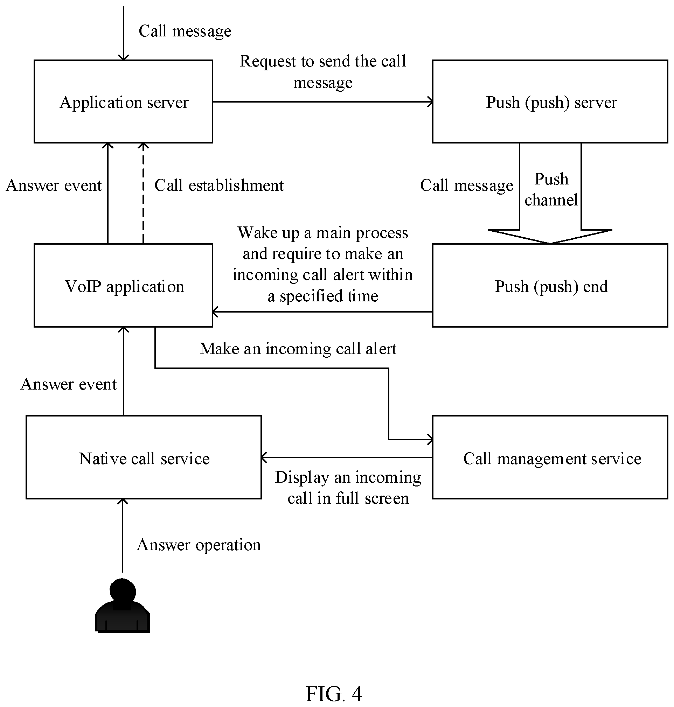

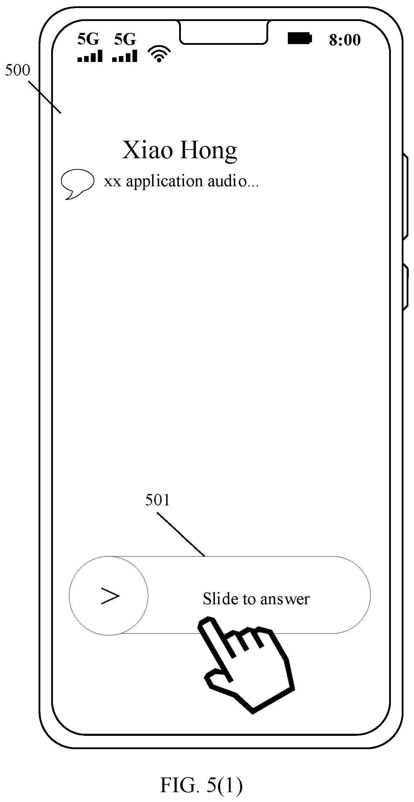

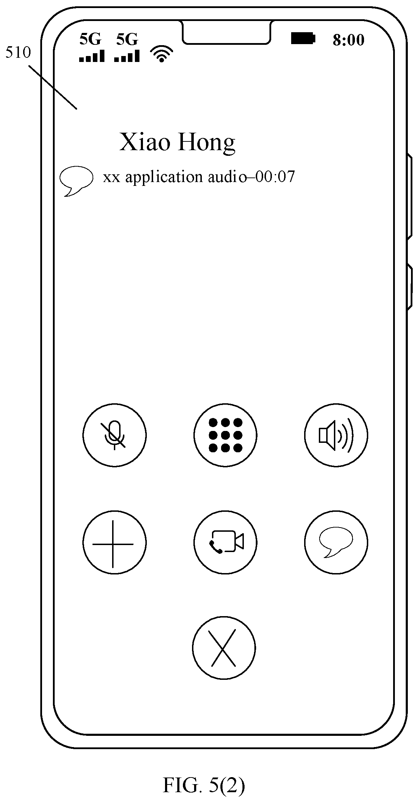

For example, FIG. 4 is a diagram of a process of another call method according to an embodiment of this application. As shown in FIG. 4, after receiving a call message sent by a calling party, an application server requests a push server to send the call message. Then, the push server delivers the call message through a push channel to a push end installed on the terminal device serving as a called party. Correspondingly, after receiving the call message, the push end directly wakes up a main process of a VoIP application, and delivers the call message to the VoIP application. Meanwhile, the push end requires the VoIP application to make an incoming call alert within a specified time; or otherwise, the main process may be destroyed. Then, the VoIP application performs call establishment with the application server in advance, and interface with a call management service to make the incoming call alert within a specified time. Then, after receiving the incoming call alert from the VoIP application, the call management service interfaces with a native call management service to display an incoming call in full screen, for example, an incoming call interface 500 in a lock screen scenario as shown in FIG. 5(1). Subsequently, the user may answer the call through the incoming call interface displayed in full screen by the native call management service. For example, the user may perform an operation such as sliding on an answer key 501 included in the incoming call interface 500 shown in FIG. 5(1), and in response to the operation, the call is connected. Meanwhile, the incoming call interface shown in FIG. 5(1) may jump to a call interface 510 shown in FIG. 5(2). Thereafter, the native call service makes an alert of an answer event to the VoIP application. Correspondingly, the VoIP application itself processes the answer event, and after making an alert of the answer event to the application server, the VoIP application may start a call with the calling party.

In this solution, because the VoIP application performs call establishment with the application server in advance, a problem of a prolonged answer delay and poor user experience in the solution shown in FIG. 2 can be solved. However, in this solution, if the VoIP application fails to make the incoming call alert within the specified time, the main process is forcibly destroyed. However, when the main process is destroyed, if the user opens the VoIP application, for example, the user opens the VoIP application through an icon of the VoIP application on the desktop, this causes a crash problem existing in the VoIP application.

In addition, in this solution, the incoming call interface (for example, the incoming call interface 500 shown in FIG. 5(1)) and the call interface (for example, the call interface 510 shown in FIG. 5(2)) displayed in full screen are excessively similar to a native call (that is, conventional telephony) interface, which is likely to mislead the user. In addition, the incoming call display solution shown in FIG. 4 is applicable only to a voice call, while a video call is still displayed by using the solution (for example, the general notification message) shown in FIG. 2. Therefore, in a video call scenario, problems of cumbersome answer operations and low connection efficiency existing in the solution shown in FIG. 2 still remain.

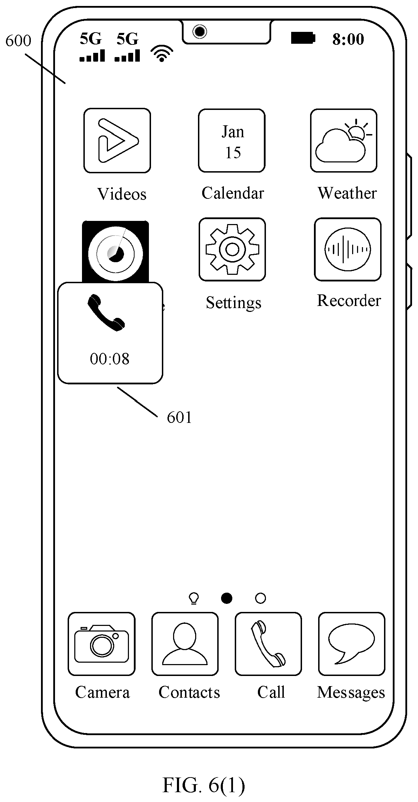

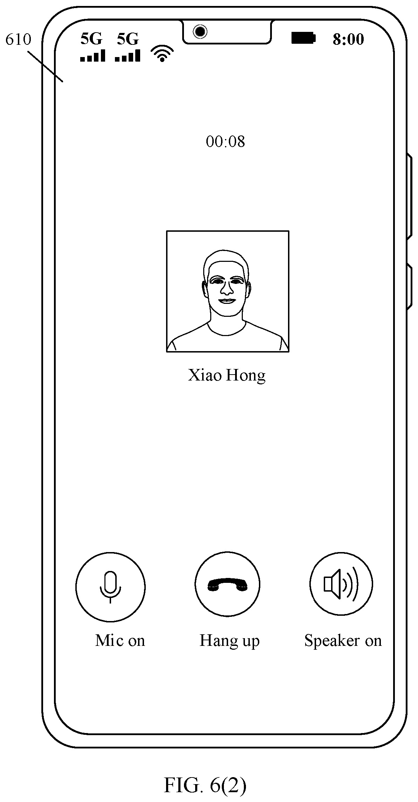

In addition, for the foregoing two scenarios based on the persistent connection and the push channel, in audio and video call scenarios, when the VoIP application switches to a background, the VoIP application actively accesses a floating window capability to prompt the user of a call progress. A manner of prompting the user of the call progress when the VoIP application is running in the background is different from a manner of prompting the user of the call progress when the VoIP application is running in the foreground. An audio call scenario is used as an example. For example, on a desktop 600 shown in FIG. 6(1), when the VoIP application is running in the background, the user may be prompted with a call progress (for example, call duration) through a floating window 601. When the VoIP application is running in the foreground, the user may be prompted with a call progress through a call interface 610 shown in FIG. 6(2). Prompting manners in the two scenarios are inconsistent, affecting user experience.

Based on the foregoing technical problems, an embodiment of this application provides a call method, which can constrain behavior of the VoIP application after the main process of the VoIP application is woken up upon arrival of a call message at a terminal side, thereby lowering a probability of increasing overall power consumption and memory occupation caused by abuse of VoIP messages, while simultaneously solving a crash problem existing in the VoIP application. In addition, a problem that the incoming call interface and the call interface displayed in full screen are excessively similar to the native call interface and may mislead the user may be solved, while quick answering is implemented, thereby improving connection efficiency. Furthermore, a problem that a manner of prompting a call progress when the VoIP application is running in the foreground is inconsistent with a manner of prompting a call progress when the VoIP application is running in the background may be solved.

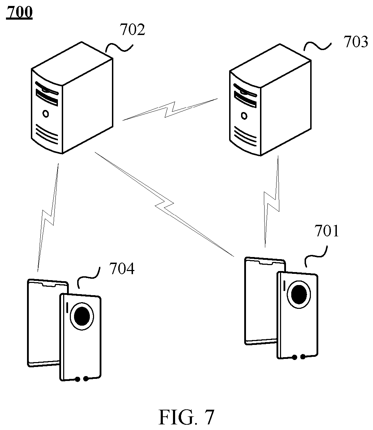

For example, FIG. 7 is a diagram of an architecture of a communication system to which a call method is applied according to an embodiment of this application. As shown in FIG. 7, the communication system 700 includes a terminal device 701, an application server 702, a push server 703, and the like.

The terminal device 701 may be various devices installed with a VoIP application. For example, the terminal device 701 may include but is not limited to a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an artificial intelligence (artificial intelligence, AI) device, a wearable device, a vehicle-mounted device, a smart home device, and/or a smart city device. Optionally, the terminal device 701 may be a fixed device, or may be a portable device. A specific form of the terminal device is not specially limited in embodiments of this application.

In some embodiments, the terminal device 701 may serve as a called party to receive a call message from a calling party (a terminal device 704 described below).

The application server (Application Server) 702 may be a server used to provide a service for the VoIP application. For example, the application server may provide a running environment for the VoIP application and manage resources such as VoIP application execution, database connections, and file systems. The application server may be used to process and respond to a user request, execute service logic, manage data storage, and the like, to ensure stable and efficient running of the VoIP application. In some embodiments of this application, when the terminal device 701 serves as a called party, the application server 702 may be responsible for receiving a call message from a calling party, and sending the call message to the push server 703. The application server 702 may be further responsible for performing call establishment with the terminal device 701.

The push server 703 may be a server that can implement a function of pushing an application message. The push server 703 may be used to process and send a push request, and push a real-time message or notification to the terminal device. In some embodiments of this application, the push server 703 may be responsible for receiving a call message from the application server 702, and delivering the call message to the terminal device 701 through a push channel.

Optionally, the application server 702 and the push server 703 may be devices or servers that have a computing function, for example, a cloud server or a network server. The server may be a single server, a server cluster including a plurality of servers, or a cloud computing service center.

It may be understood that in this embodiment of this application, an example in which the application server 702 and the push server 703 are implemented as two different servers is used. In another embodiment, the application server 702 and the push server 703 may alternatively be integrated together to implement as one server.

Optionally, operating systems installed on the terminal device 701, the application server 702, the push server 703, and the like include but are not limited to iOS^{®}, Android^{®}, Harmony^{®}, Windows^{®}, Linux^{®}, or another operating system. Certainly, the operating system may alternatively not be installed.

Optionally, a connection may be established between any two devices of the terminal device 701, the application server 702, the push server 703, and the like by using a wired communication technology and/or a wireless communication technology. The wireless communication technology includes but is not limited to at least one of the following: near field communication (near field communication, NFC), Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), Zigbee (Zigbee), frequency modulation (frequency modulation, FM), infrared (infrared, IR), a wide area network transferred by using a relay (relay) device, or the like.

For example, when the wireless communication technology is the wide area network, the wireless communication technology may be a third generation mobile communication technology (3rd-generation wireless telephone technology, 3G) network, a fourth generation mobile communication technology (the 4th generation mobile communication technology, 4G) network, a fifth generation mobile communication technology (5th-generation mobile communication technology, 5G) network, a future evolved public land mobile network (public land mobile network, PLMN), the Internet, or the like.

It may be understood that FIG. 7 is merely a simplified diagram of an example for ease of understanding. During actual application, the communication system shown in FIG. 7 may further include another device, for example, the terminal device 704. The terminal device 704 may also be various devices installed with the VoIP application. In some embodiments, the terminal device 704 may serve as a calling party to send a call message to a called party (for example, the terminal device 701 described above). The terminal device 704 and the terminal device 701 may be terminal devices of a same type, or may be terminal devices of different types. For other descriptions (such as a communication manner and a device type) of the terminal device 704, refer to corresponding descriptions of the terminal device 701.

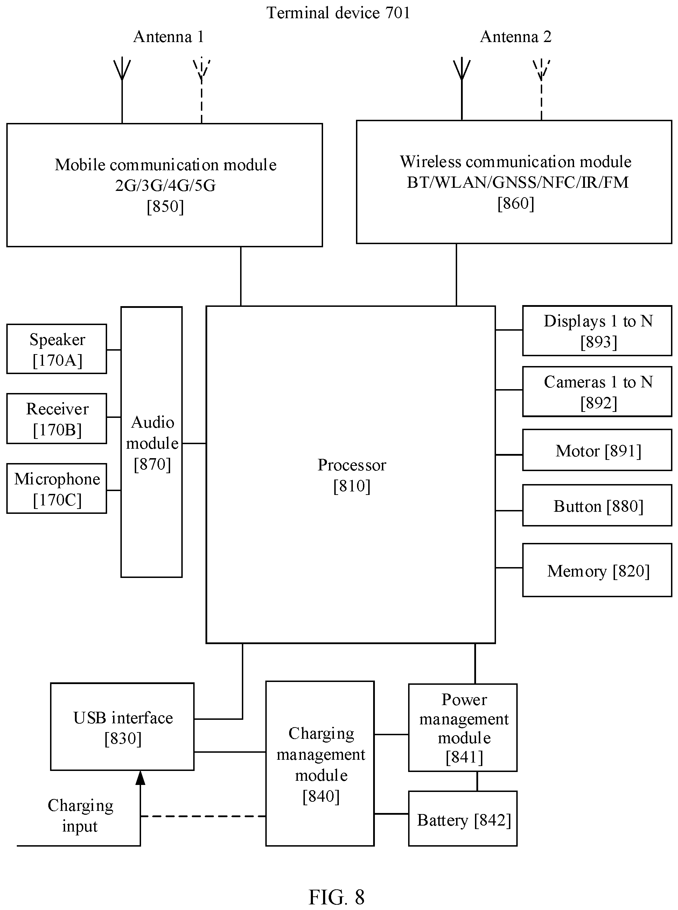

For example, FIG. 8 is a diagram of a structure of the terminal device according to an embodiment of this application. As shown in FIG. 8, the terminal device 701 may include a processor 810, a memory 820, a universal serial bus (universal serial bus, USB) interface 830, a charging management module 840, a power management module 841, a battery 842, an antenna 1, an antenna 2, a mobile communication module 850, a wireless communication module 860, an audio module 870, a speaker 870A, a receiver 870B, a microphone 870C, a button 880, a motor 891, a camera 892, a display 893, and the like.

The processor 810 may include one or more processing units. For example, the processor 810 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 810, and is configured to store instructions and data. In some embodiments, the memory in the processor 810 is a cache memory. The memory may store instructions or data just used or cyclically used by the processor 810. If the processor 810 needs to use the instructions or the data again, the processor may directly invoke the instructions or the data from the memory. This avoids repeated access and reduces waiting time of the processor 810, thereby improving efficiency of a system.

In some embodiments, the processor 810 may include one or more interfaces, for example, the USB interface 830.

The memory 820 may be configured to store computer-executable program code. The executable program code includes instructions. The memory 820 may include a high-speed random access memory, and may further include a non-volatile memory, for example, at least one magnetic disk storage device, a flash memory, or universal flash storage (universal flash storage, UFS). The processor 810 runs the instructions stored in the memory 820 and/or the instructions stored in the memory disposed in the processor, to perform various function applications of the terminal device 701 and data processing.

The charging management module 840 is configured to receive a charging input from a charger. The charging management module 840 may further supply power to an electronic device by using the power management module 841 while charging the battery 842.

The power management module 841 is configured to connect the battery 842 and the charging management module 840 to the processor 810. The power management module 841 receives an input from the battery 842 and/or the charging management module 840, and supplies power to the processor 810, the memory 820, the display 893, the camera 892, the wireless communication module 860, and the like.

A wireless communication function of the terminal device 701 may be implemented through the antenna 1, the antenna 2, the mobile communication module 850, the wireless communication module 860, the modem processor, the baseband processor, and the like.

The antenna 1 and the antenna 2 are configured to transmit and receive an electromagnetic wave signal. Each antenna in the terminal device 701 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 850 may provide a wireless communication solution that is applied to the terminal device 701 and that includes 2G/3G/4G/5G or the like.

The wireless communication module 860 may provide a wireless communication solution that is applied to the terminal device 701 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 850 in the terminal device 701 are coupled, and the antenna 2 and the wireless communication module 860 in the terminal device 701 are coupled, so that the terminal device 701 can communicate with a network and another device (for example, the application server 702 or the push server 703) by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like.

The audio module 870 is configured to convert digital audio information into an analog audio signal output, and is also configured to convert an analog audio input into a digital audio signal.

The speaker 870A, also referred to as a "loudspeaker", is configured to convert an audio electrical signal into a sound signal. The terminal device 701 may answer a call in a hands-free mode via the speaker 870A.

The receiver 870B, also referred to as an "earpiece", is configured to convert an audio electrical signal into a sound signal. When a call is answered or a voice message is listened to by using the terminal device 701, the receiver 870B may be put close to a human ear to listen to a voice.

The microphone 870C, also referred to as a "mike" or a "mic", is configured to convert a sound signal into an electrical signal. When making a call or sending a voice message, a user may make a sound near the microphone 870C through the mouth of the user, to input a sound signal to the microphone 870C.

The button 880 includes a power button, a volume button, and the like. The button 880 may be a mechanical button, or may be a touch-sensitive button. The terminal device 701 may receive a button input, and generate a button signal input related to user settings and function control of the terminal device 701.

The motor 891 may generate a vibration prompt. For example, the motor 891 may be configured to provide a vibration prompt for an incoming call.

The camera 892 is configured to capture a static image or a video. In some embodiments, the terminal device 701 may include one or N cameras 892, where N is a positive integer greater than 1. In some embodiments of this application, the camera may be configured to capture an image in a video call scenario.

The display 893 is configured to display an image, a video, and the like. In some embodiments of this application, the display 893 may be configured to display various interfaces and information related to a VoIP call.

In some embodiments, a software structure of the terminal device 701 may use a layered architecture, an event-driven architecture, a microkernel architecture, a micro service architecture, or a cloud architecture. In this embodiment of the present invention, the layered architecture is used as an example to describe a software structure of the terminal device 701.

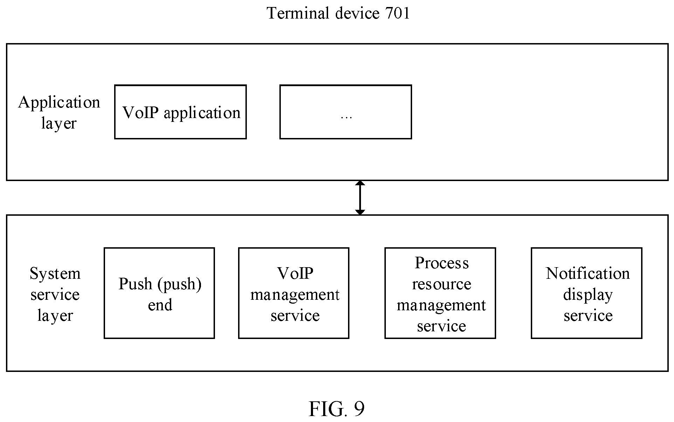

FIG. 9 is a diagram of a software structure of the terminal device 701 according to an embodiment of the present invention.

In the layered architecture, software is divided into several layers, and each layer has a clear role and task. The layers communicate with each other through a software interface. In some embodiments, the terminal device 701 may include two layers: an application layer and a system service layer from top to bottom.

The application layer may include a series of application packages, for example, a VoIP application. The VoIP application may be used to perform call establishment with an application server, to implement a VoIP call. The VoIP application may be further used to process an event such as answering or hanging up. In some embodiments, when the VoIP application is running in a background of the terminal device 701, the VoIP application may receive a call message from the application server through a push channel. In some other embodiments, when the VoIP application is running in a foreground of the terminal device 701, the VoIP application may further receive the call message from the application server through a persistent connection between the VoIP application and the application server.

The system service layer may include a series of system services, such as a push end, a process resource management service, a VoIP management service, and a notification display service. The push end may be used to receive a call message delivered by a push server through the push channel, and deliver the call message to the VoIP application. The push end may be further used to manage a process of the VoIP application, including waking up (or referred to as unfreezing), keeping alive, and freezing (or referred to as de-keeping alive) the process. The process resource management service may be used to be responsible for performing operations such as waking up, keeping alive, and freezing the process of the VoIP application. For example, the process resource management service may allocate required system resources (including but not limited to memory resources, hard disk resources, and processor resources) to the process of the VoIP application, to wake up and keep alive the process of the VoIP application. Alternatively, the process resource management service may reclaim the system resources occupied by the process of the VoIP application, to freeze the process of the VoIP application. The VoIP management service may be used to receive and process an incoming call alert message from the VoIP application. The incoming call may come through the push channel or through the persistent connection. The VoIP management service may be further used to publish incoming call information, process answering or hanging up of the VoIP call, manage keep-alive of the process of the VoIP application, and the like. The notification display service may be used to display VoIP call information, for example, incoming call information.

It may be understood that, in this embodiment of this application, keeping the main process of the VoIP application alive may allow the main process to remain resident in the memory and keep running. Freezing the main process of the VoIP application merely suspends the main process temporarily, but does not terminate execution of the main process or destroy the main process. Once the main process is required to run again, the main process may be woken up and quickly resume running.

The foregoing system services are divided based on functions. During actual application, there may be another division manner. For example, a plurality of system services may be integrated, or division may be performed at a finer granularity based on a plurality of functions included in each system service.

It may be understood that the structures shown in FIG. 8 and FIG. 9 do not constitute a specific limitation on the terminal device 701. In some other embodiments of this application, the terminal device 701 may include more or fewer components than those shown in the figure, or some components may be combined, or some components may be split, or a different component arrangement may be used. The components shown in the figure may be implemented by hardware, software, or a combination of software and hardware.

For both a hardware structure and a software structure of the terminal device 704, refer to structure descriptions of the terminal device 701. For structures of the push server 703 and the application server 702, refer to the descriptions of the terminal device 701 shown in FIG. 8. Optionally, the push server 703 or the application server 702 may include more or fewer components than those shown in FIG. 8. For example, the push server 703 or the application server 702 may include only a processor, a memory, a communication interface (or referred to as a communication module), and the like.

All technical solutions in the following embodiments may be implemented in a device having the structures shown in FIG. 8 and FIG. 9 and in a system having the architecture shown in FIG. 7. In the following description, the terminal device 701 is a terminal device, the push server 703 is a push server, and the application server 702 is an application server.

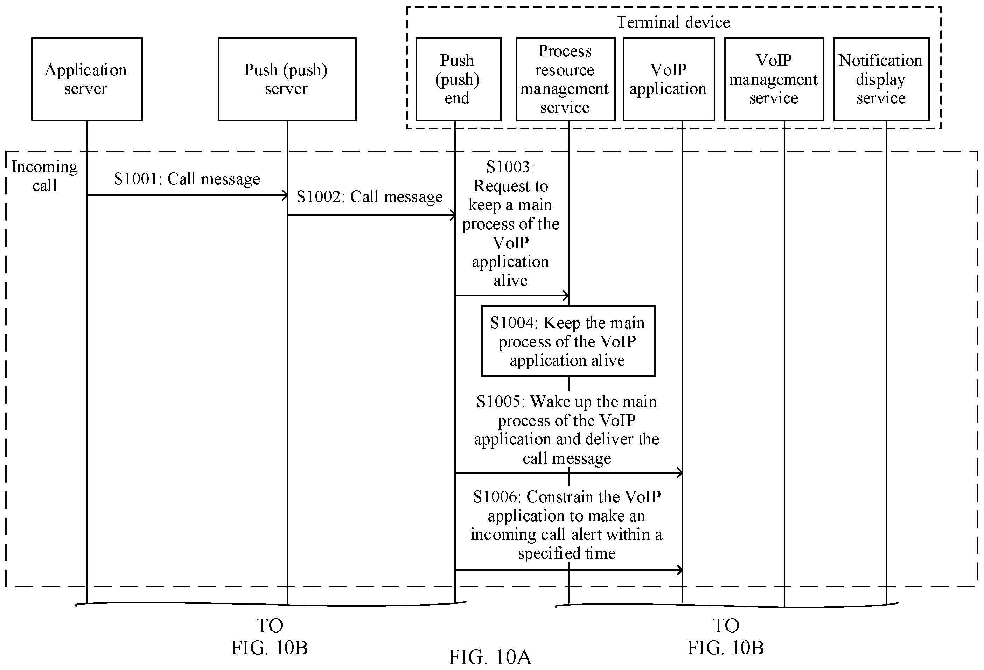

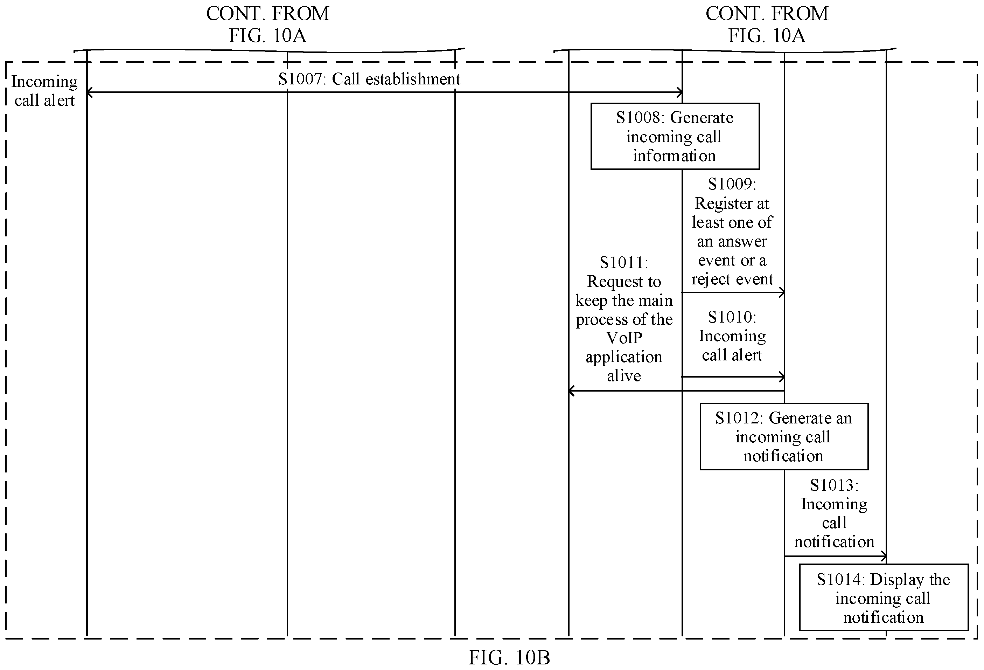

For example, FIG. 10A and FIG. 10B are a schematic flowchart of a call method according to an embodiment of this application. As shown in FIG. 10A and FIG. 10B, the method includes the following steps.

S1001: An application server sends a call message to a push server. Correspondingly, the push server receives the call message from the application server.

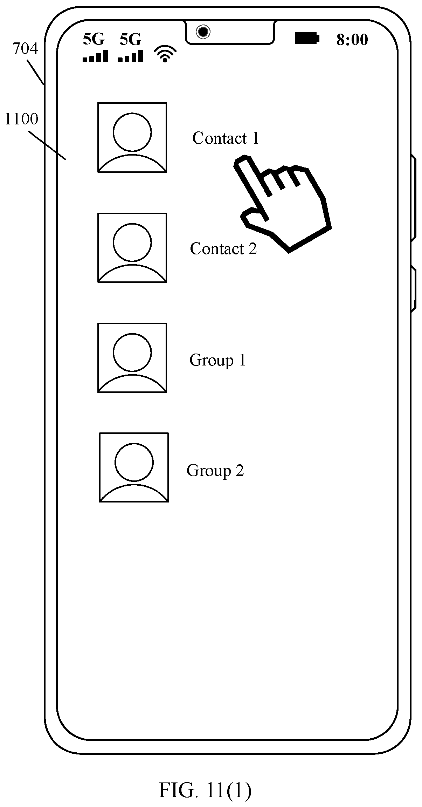

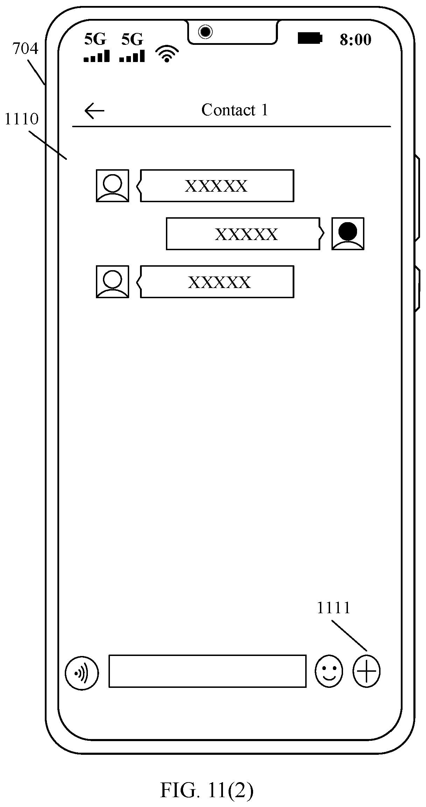

The call message may be a call message sent by a calling party, for example, a call message sent by a VoIP application installed on the calling party. For example, the calling party is the terminal device 704. As shown in FIG. 11(1), the terminal device 704 may display a running interface 1100 of the VoIP application. The running interface of the VoIP application may include one or more contacts or groups. A user may select any of the contacts or groups to make a voice call or a video call. For example, if the terminal device detects that the user performs a tap operation on a contact 1, in response to the operation, the terminal device 704 displays a chat interface 1110 with the contact 1 as shown in FIG. 11(2). The user may implement a video call or a voice call with the contact by invoking a video call control or a voice call control on the chat interface 1110.

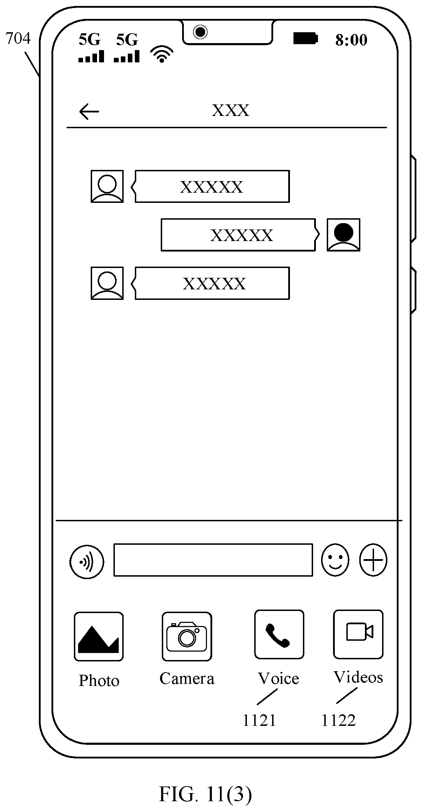

For example, the chat interface 1110 may include a function key 1111. The terminal device 704 detects a tap operation performed by the user on the function key 1111, and in response to the operation, the terminal device 704 displays a voice call control 1121, a video call control 1122, and the like as shown in FIG. 11(3). The application server may obtain a call message from the terminal device 704 in response to a trigger operation performed by the user on the voice call control 1121 or the video call control 1122.

It may be understood that FIG. 11(1) to FIG. 11(3) are merely an example of an operation for generate a call message by the VoIP application on the terminal device 704. In another embodiment, the operation for generating the call message by the VoIP application may be various key operations, gesture operations, voice operations, or the like.

It may be further understood that, in this embodiment of this application, the call message may be a call message used for a voice call, or may be a call message used for a video call.

S1002: The push server delivers the call message to a push end through a push channel. Correspondingly, the push end receives the call message from the push server.

S1003: The push end serves as a proxy for the VoIP application to request a process resource management service to keep a main process of the VoIP application alive.

S1004: The process resource management service keeps the main process of the VoIP application alive.

In some embodiments, there may be a plurality of proxies for the VoIP application, for example, the push end and a VoIP management service. In this embodiment, the process resource management service may keep the main process of the VoIP application alive based on a granularity of a proxy (or referred to as an agent). That is, the process resource management service may keep the main process of the VoIP application alive separately according to a keep-alive instruction requested by each proxy of the VoIP application.

In some scenarios, the process resource management service may simultaneously receive different instructions from different proxies of the VoIP application. For example, assuming that the different agents of the VoIP application are the push end and the VoIP management service respectively, the push end requests the process resource management service to keep the main process of the VoIP application alive, while the VoIP management service requests to freeze the main process of the VoIP application. In this case, in response to instructions of the foregoing two proxies, the process resource management service may keep the main process of the VoIP application alive. In other words, a priority of the instruction for requesting to keep the main process of the VoIP application alive is higher than a priority of the instruction for simultaneously requesting to freeze the main process of the VoIP application. In this way, the VoIP application can be ensured to run normally.

S1005: The push end wakes up the main process of the VoIP application and delivers the call message. Correspondingly, the VoIP application receives the call message from the push end.

In this way, after receiving the call message delivered by the push server, the push end first wakes up the main process of the VoIP application, and interfaces with the process resource management service by serving as the proxy for the VoIP application to request unfreezing and keep-alive of the main process, thereby ensuring that the VoIP application is not frozen in an incoming call process and an ongoing call process. In addition, it takes some time to wake up the main process of the VoIP application. Therefore, step S1005 is performed first, and then step S1006 is performed, so that sufficient time may be reserved for the VoIP application to make an incoming call alert.

S1006: The push end constrains the VoIP application to make an incoming call alert within a specified time.

In some embodiments, the push end may constrain, by setting a freeze timer, the VoIP application to make an incoming call alert within the specified time. Specifically, after performing step S1005, the push end starts the freeze timer to start timing, and refreezes the main process of the VoIP application when the timing reaches specified duration. Optionally, in this embodiment of this application, the push end may also perform a manner shown in step S1003, and serves as the proxy for the VoIP application to request the process resource management service to re-freeze the main process of the VoIP application.

Optionally, the push end may set the freeze timer based on a granularity of the application and the call. In other words, the freeze timer is set separately for different VoIP applications, and the freeze timer is set separately for different calls within a same VoIP application. In this way, operations of keeping the main process alive and freezing the main process may be separately performed on main processes of different VoIP applications, so that running of different VoIP applications does not affect each other. For different call processes within the same VoIP application, the operations of keeping the main process alive and freezing the main process are performed separately, so that different call processes do not affect each other.

In this way, after waking up the main process of the VoIP application, the push end constrains the VoIP application to make an incoming call alert within the specified time by setting the freeze timer, or the like. When the VoIP application fails to make an incoming call alert within the specified time, the main process of the VoIP application is refrozen. Alternatively, when the process resource management service can keep the main process of the VoIP application alive based on a granularity of the proxy, if no other proxy requests to keep the main process of the VoIP application alive, the main process of the VoIP application is also refrozen. This can not only constrain behavior of the VoIP application, but also lower a probability of increasing overall power consumption and memory occupation caused by abuse of VoIP messages. In addition, the main process of the application may further be woken up in a manner of refreezing, thereby solving a crash problem existing in the VoIP application.

Certainly, in other embodiments, after the push end performs step S 1005, the push end may monitor the behavior of the VoIP application within the specified duration. After determining that the VoIP application does not make an incoming call alert within the specified time, the push end may refreeze the main process of the VoIP application. Conversely, after it is determined that the VoIP application makes an incoming call alert within the specified time, the main process of the VoIP application may not be refrozen. Optionally, the push end may determine, from a feedback message of another service (for example, the VoIP management service), whether the VoIP application makes an incoming call alert within the specified time. Optionally, in this implementation, the push end may alternatively start timing by using a timer. Before the timing reaches the specified duration, if it is determined that the VoIP application has made an incoming call alert, the timer may be shut down, and correspondingly, the main process of the VoIP application continues to be kept alive. Conversely, when the timing reaches the specified duration, if it is determined that the VoIP application has not made an incoming call alert, the main process of the VoIP application may be refrozen.

Optionally, in addition to performing step S1003, step S1005, and step S1006, the push end may further perform operations such as verifying validity of call messages and deduplication, which can ensure security of the call process. These operations are not described in this specification.

Step S1001 to step S1006 describe a process of an incoming call, and the following describes a process of making an incoming call alert by the VoIP application. For example, as shown in FIG. 10B, the process includes step S1007 to step S1014.

S1007: The VoIP application performs call establishment with the application server.

In this way, before the user performs an answer operation, the VoIP application performs call establishment with the application server, that is, establishes a connection in advance. Compared with a manner of performing call establishment with the application server after the user performs an answer operation, this can reduce an answer delay and improve user experience.

S1008: The VoIP application generates incoming call information.

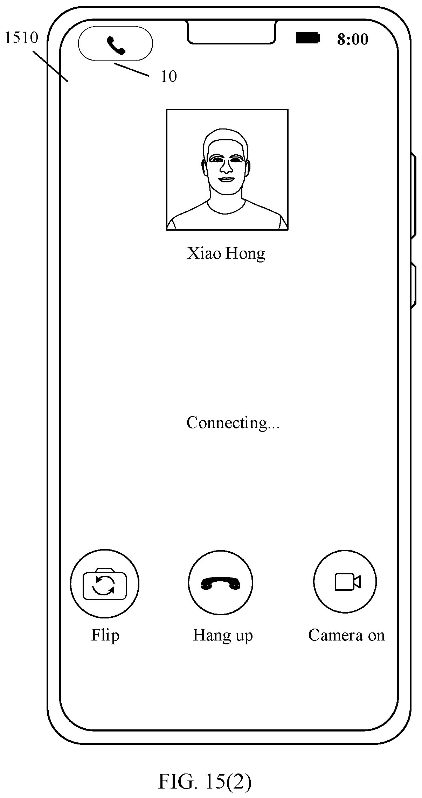

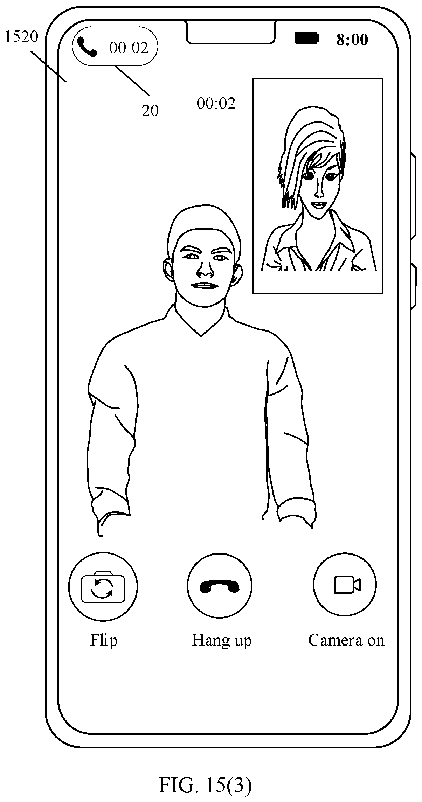

The incoming call information may include one or more of caller information (such as a profile picture and a name), a notification landing page address, and the like. The notification landing page address may be used to index a landing page displayed by the VoIP application when a call interface is opened through the incoming call notification, for example, an interface 1510 shown in FIG. 15(2) and a video image 1520 shown in FIG. 15(3).

In some embodiments, after performing step S1007 and successfully establishing a connection with the application server, the VoIP application may then perform step S1008. Conversely, after a connection with the application server fails to be established, step S1008 may not be performed. In this way, overheads of generating the incoming call information by the terminal device can be reduced. Certainly, in another embodiment, step S 1007 and step S 1008 may alternatively be performed synchronously.

S1009: The VoIP application registers at least one of an answer event or a reject event with the VoIP management service.

The answer event may be used by the VoIP management service to notify, when determining that the user performs an answer operation, the VoIP application that the answer event occurs. The reject event may be used by the VoIP management service to notify, when determining that the user performs a reject operation, the VoIP application that the reject event occurs.

Optionally, step S1008 and step S1009 may be performed synchronously, or may be performed successively. When the steps are performed successively, a sequence is not limited in this embodiment of this application.

S1010: The VoIP application makes an incoming call alert to the VoIP management service. Correspondingly, the VoIP management service receives the incoming call alert from the VoIP application.

Optionally, the incoming call alert may include the incoming call information in step S1008. In this way, with addition of an incoming call alert capability in the VoIP management service, the VoIP application can make an incoming call alert to the VoIP management service.

S1011: The VoIP management service serves as a proxy for the VoIP application to request the process resource management service to keep the main process of the VoIP application alive. Correspondingly, the process resource management service keeps the main process of the VoIP application alive.

In some embodiments, before performing step S1011, the VoIP application may further verify validity of the incoming call information, and upon successful verification, subsequently perform step S1011.

In this way, through performing of step S1011, a new proxy, namely the VoIP management service, interfacing with the process resource management service is added. The VoIP management service serves as the proxy for the VoIP application to request to continue to keep the main process of the VoIP application alive. Even if the freeze timer in step S1006 ends timing, the main process of the VoIP application may still continue to be kept alive, instead of refreezing the main process of the VoIP application in response to the freeze timer.

Certainly, with reference to the solution in another embodiment described in step S1006, because the VoIP application makes an incoming call alert within the specified time, the VoIP application is not refrozen. In other words, there is no scenario in which the main process of the VoIP application needs to be refrozen when the freeze timer ends timing, and therefore, the VoIP management service may also omit performing step S1011.

S1012: The VoIP management service generates an incoming call notification.

In some embodiments, the VoIP management service may generate an incoming call notification based on the incoming call information from the VoIP application. The incoming call notification may include one or more of caller information, an answer key, a reject key, and the like. The answer key may be used to receive an answer operation of the user, and the reject key may be used to receive a reject operation of the user, and the like. Optionally, in this embodiment of this application, the answer key and the reject key may be implemented by using different controls, or may be implemented by performing different operations on a same control.

S1013: The VoIP management service sends the incoming call notification to a notification display service. Correspondingly, the notification display server receives the incoming call notification from the VoIP management service.

Optionally, after performing step S1013, the VoIP management service may further turn on a screen of the terminal device.

S1014: The notification display service displays the incoming call notification.

Optionally, the notification display service may display the incoming call notification on a lock screen interface, a notification center, or the like. It may be understood that the lock screen interface in this example of this application is a lock screen interface with a password set. In another embodiment, the lock screen interface may alternatively be a lock screen interface with no password set.

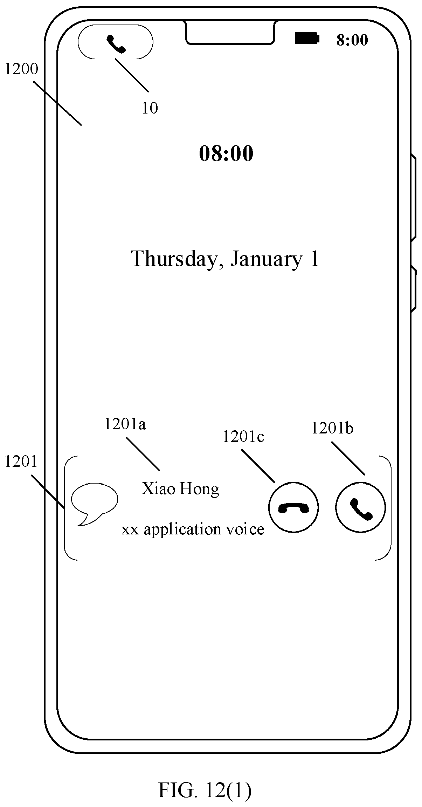

For example, a voice call scenario is used as an example. FIG. 12(1) is a diagram of an incoming call notification according to an embodiment of this application. As shown in FIG. 12(1), the terminal device displays a lock screen interface 1200 (which may be used as an example of a first interface). An incoming call notification 1201 (which may be used as an example of a first incoming call notification message) is displayed on the lock screen interface 1200. Caller information 1201a (such as a name and a profile picture, where only the name is shown in FIG. 12(1)), an answer key 1201b (which may be used as an example of a first answer key), a reject key 1201c, and the like may be displayed in the incoming call notification 1201. The incoming call notification 1201 may allow the user to answer a voice call (which may be used as an example of a first VoIP call) or reject the voice call without unlocking the terminal device. Optionally, the incoming call notification 1201 may further display an identifier of the incoming voice call, for example, "xx application voice".

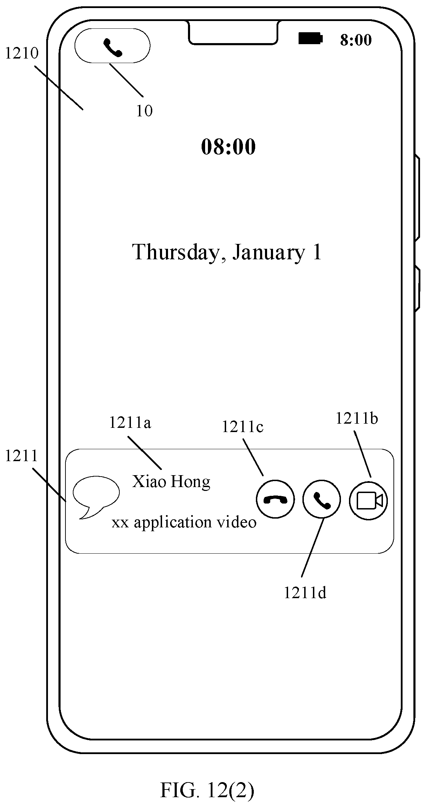

For example, the call scenario is a video call scenario. FIG. 12(2) is a diagram of another incoming call notification according to an embodiment of this application. As shown in FIG. 12(2), the terminal device displays a lock screen interface 1210. An incoming call notification 1211 (which may also be used as an example of the first incoming call notification message) is displayed on the lock screen interface 1210. Caller information 1211a (for example, a name and a profile picture, where only the name is shown in FIG. 12(2)), an answer key 1211b (which may be used as an example of a second answer key), a reject key 1211c, and the like may be displayed in the incoming call notification 1211. The incoming call notification 1211 may allow the user to answer a video (which may be used as an example of a second VoIP call) after unlocking the terminal device, or allow the user to reject the video without unlocking the terminal device. Optionally, the incoming call notification 1211 may further display an identifier of the incoming video call, for example, "xx application video". Optionally, in the video call scenario, the user may alternatively choose to conduct only a voice call. For example, as shown in FIG. 12(2), an answer key 1211d (which may also be used as an example of the first answer key) may be further displayed in the incoming call notification 1211. The answer key 1211d may allow the user to implement the voice call without unlocking the terminal device. In other words, the incoming call notification 1211 may also allow the user to implement voice answering without unlocking the terminal device.

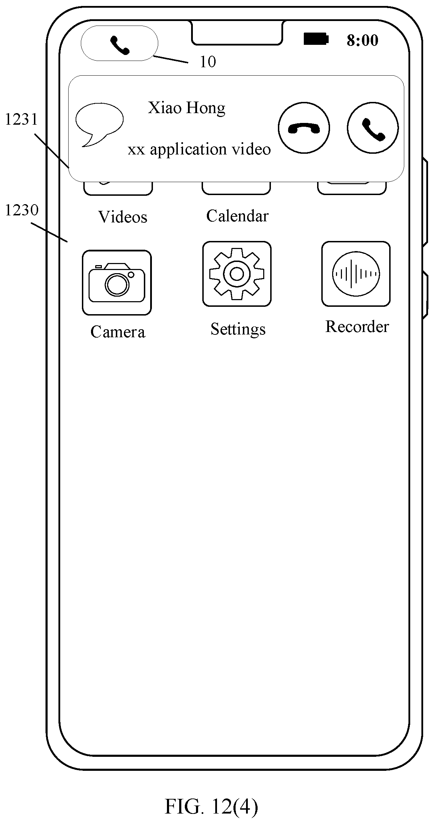

It may be understood that, in a non-lock-screen video call scenario, an incoming video call notification (such as an incoming call notification shown in FIG. 12(4)) received by the terminal device may also include the answer key 1211d, to facilitate the user in choosing to conduct a voice call.

Optionally, when step S1014 is performed, the VoIP application may further perform ringing and vibration. Certainly, the ringing and vibration operation may alternatively be performed by another service (for example, the VoIP management service). This is not specifically limited in this embodiment of this application.

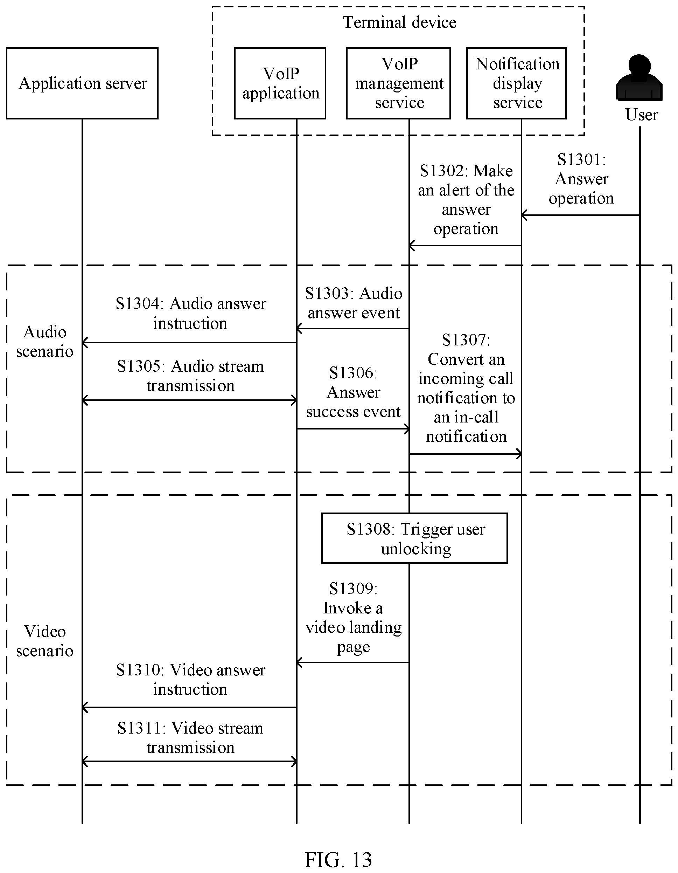

Step S1007 to step S1014 describe a process of incoming call alert by the VoIP application, and the following describes an answering process. For example, FIG. 13 is a diagram of an answering procedure according to an embodiment of this application. As shown in FIG. 13, the procedure includes the following steps.

S1301: A notification display service receives an answer operation performed by a user.

For example, the answer operation may be a tap operation on the answer key 1201b, the answer key 1211b, or the like shown in 12. Certainly, the answer operation may alternatively be a trigger operation on an answer key included in an incoming call notification presented in an unlock interface, or the like. Alternatively, the answer operation may be another voice operation, another gesture operation, or the like.

S1302: The notification display service makes an alert of the answer operation to a VoIP management service. Correspondingly, the VoIP management server receives the alert of the answer operation from the notification display service.

In some embodiments, a voice call scenario is used as an example. A terminal device may perform step S1303 to step S1307.

S1303: The VoIP management service makes an alert of an audio answer event to the VoIP application. Correspondingly, the VoIP application receives the audio answer event from the VoIP management service.

In some embodiments, the VoIP management service may perform step S1303 based on step S1009 shown in FIG. 10B in which the VoIP application registers the answer event with the VoIP management service.

S1304: The VoIP application sends an audio answer instruction to an application server. Correspondingly, the application server receives the audio answer instruction from the VoIP application.

The VoIP application may send the audio answer instruction to the application server through the call connection established in step S1007 shown in FIG. 10B.

S1305: Perform audio stream transmission between the VoIP application and the application server.

After the application server returns an answer success to the VoIP application, audio stream transmission may be performed between the VoIP application and the application server, and the user may conduct an audio call. According to the audio answer method, the user can successfully answer the call by performing an operation such as tapping on the answer key 1201b shown in FIG. 12(1). In other words, in a lock screen scenario, voice answering may be implemented in one step through the incoming call notification 1201, so that answering steps can be reduced, operations can be simplified, and connection efficiency can be improved.

S1306: The VoIP application reports an answer success event to the VoIP management service. Correspondingly, the VoIP management service receives the answer success event reported by the VoIP application.

S1307: The VoIP management service interfaces with the notification display service to convert the incoming call notification to an in-call notification.

The in-call notification may be used to prompt the user that a voice call is in progress.

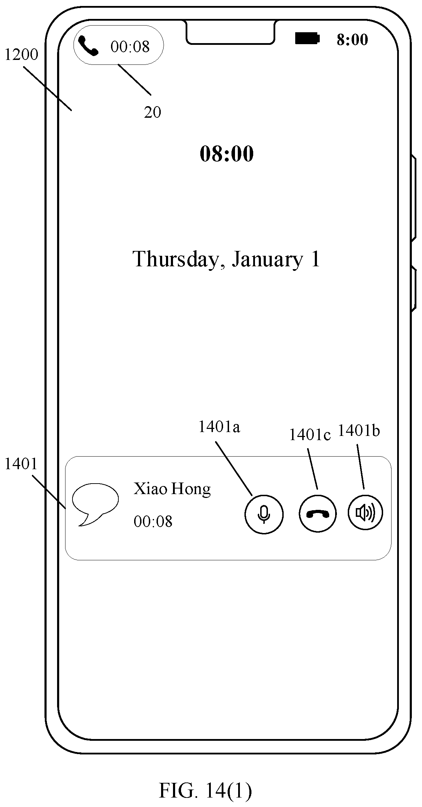

For example, with reference to the incoming call notification 1201 shown in FIG. 12(1), the incoming call notification 1201 may be converted into an in-call notification 1401 included in a lock screen interface 1200 shown in FIG. 14(1). As shown in FIG. 14(1), the in-call notification 1401 may include a microphone key 1401a, a speaker key 1401b, a hang-up key 1401c, and the like. Optionally, the hang-up key 1401c and the reject key 1201c shown in FIG. 12(1) may be implemented as a same key, or may be implemented as different keys.

In some embodiments, a video call scenario is used as an example. The terminal device may perform step S1308 to step S1311.

S1308: The VoIP management service triggers user unlocking.

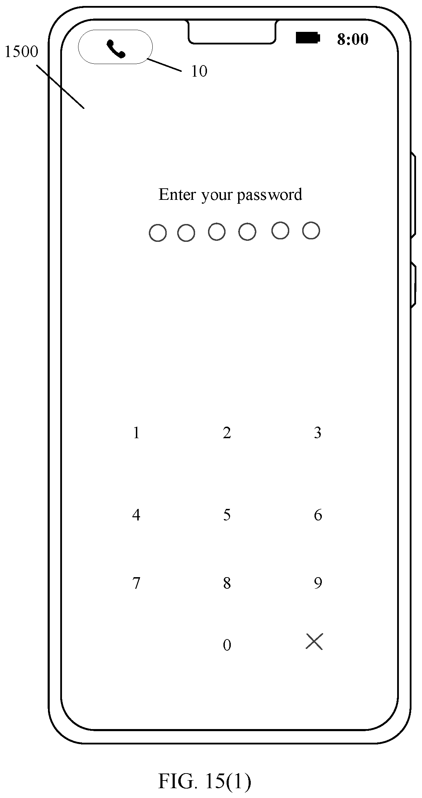

In some embodiments, the VoIP management service may interface with the notification display service or another service to display the unlock interface to trigger user unlocking. For example, with reference to the incoming call notification 1211 shown in FIG. 12(2), after the user performs an operation such as tapping on the answer key 1211b, in response to the operation, the terminal device may present an unlock interface 1500 as shown in FIG. 15(1). The user may enter a password in the unlock interface 1500 to unlock the device. Certainly, in other embodiments, the VoIP management service may alternatively trigger user unlocking in other manners, for example, in various manners such as a face and a fingerprint.

S1309: The VoIP management service invokes a video answering landing page of a main process of the VoIP application.

Optionally, the video answering landing page may be generated by the VoIP application and sent to the VoIP management service by performing step S1010 shown in FIG. 10B.

In some embodiments, the video answering landing page of the main process of the VoIP application may be an answering-in-progress interface for prompting the user. For example, after the terminal device is unlocked in a manner shown in FIG. 15(1), the terminal device may present an answering-in-progress interface 1510 shown in FIG. 15(2). The interface 1510 is the video answering landing page of the main process of the VoIP application.

Similarly, in an audio call scenario, the terminal device may also present an answering-in-progress notification for prompting the user. For example, with reference to the incoming call notification 1201 shown in FIG. 12(1), after the user performs an answer operation, such as tapping, on the answer key 1201b, in response to the operation, before the terminal device presents the in-call notification 1401 shown in FIG. 14(1), the terminal device may further present an answering-in-progress notification. For example, the answering-in-progress notification may be a notification obtained after wording "xx application voice" included in the incoming call notification 1201 is converted into wording "connecting". Similarly, the VoIP management service can display the answering-in-progress notification to the notification display service.

Certainly, in another embodiment, because a connection process is fast, the answering-in-progress interface or the answering-in-progress notification may be invisible to the user. Alternatively, in another embodiment, the terminal device may omit displaying the answering-in-progress interface or the answering-in-progress notification, but directly present a post-answering notification or interface. In other words, in this embodiment, the video answering landing page may alternatively be a video image 1520 shown in FIG. 15(3) below.

S1310: The VoIP application sends a video answer instruction to the application server. Correspondingly, the application server receives the video answer instruction from the VoIP application.

The VoIP application may send the video answer instruction to the application server through the call connection established in step S1007 shown in FIG. 10B.

S1311: Perform video stream transmission between the VoIP application and the application server.

After the application server returns an answer success to the VoIP application, video stream transmission may be performed between the VoIP application and the application server.

Meanwhile, the VoIP application may further display a video image. For example, upon successful answering, the interface 1510 shown in FIG. 15(2) may jump to the video image 1520 shown in FIG. 15(3), and the user can conduct a call normally.

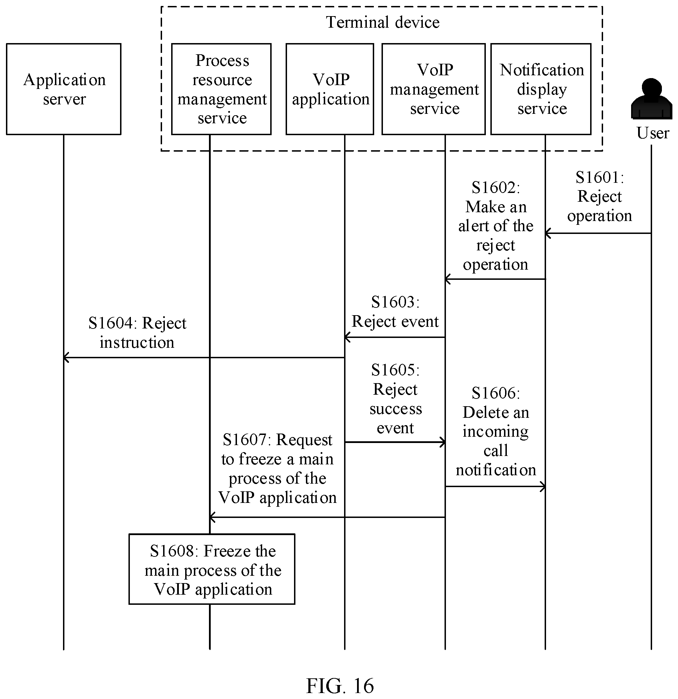

FIG. 13 describes an answering procedure, and the following describes a rejecting procedure. For example, FIG. 16 is a diagram of a rejecting procedure according to an embodiment of this application. As shown in FIG. 16, the procedure includes the following steps.

S1601: A notification display service receives a reject operation performed by a user.

For example, the reject operation may be a tap operation on the reject key 1201c, the reject key 1211c, or the like shown in FIG. 12(1) to FIG. 12(4). Certainly, the reject operation may alternatively be a trigger operation on a reject key included in an incoming call notification presented in an unlock interface, or the like. Alternatively, the reject operation may be another voice operation, another gesture operation, or the like.

S1602: The notification display service makes an alert of the reject operation to a VoIP management service. Correspondingly, the VoIP management server receives the alert of the reject operation from the notification display service.

S1603: The VoIP management service makes an alert of a reject event to a VoIP application. Correspondingly, the VoIP application receives the reject event from the VoIP management service.

In some embodiments, the VoIP management service may perform step S1603 based on step S1009 shown in FIG. 10B in which the VoIP application registers the reject event with the VoIP management service.

S1604: The VoIP application sends a reject instruction to the application server. Correspondingly, the application server receives the reject instruction from the VoIP application.

The VoIP application may send the reject instruction to the application server through the call connection established in step S1007 shown in FIG. 10B.

After the application server returns a reject success, the call ends.

S1605: The VoIP application reports a reject success event to the VoIP management service. Correspondingly, the VoIP management service receives the reject success event reported by the VoIP application.

S1606: The VoIP management service interfaces with the notification display service to delete an incoming call notification.

For example, the incoming call notification may be the incoming call notification 1201, the incoming call notification 1211, or the like shown in FIG. 12(1) to FIG. 12(4).

S1607: The VoIP management service serves as a proxy for the VoIP application to request a process resource management service to freeze a main process of the VoIP application.

Step S1606 and step S1607 may be performed synchronously, or may be performed successively. When the steps are performed successively, a sequence is not limited in this application.

S1608: The process resource management service freezes the main process of the VoIP application.

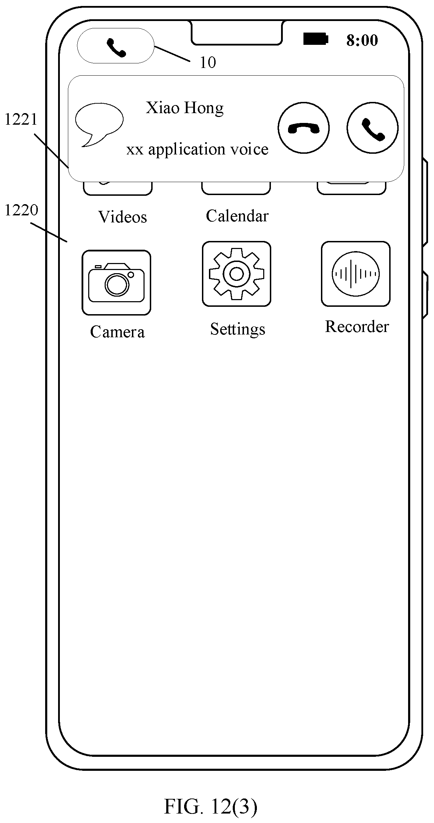

The foregoing describes a call process in which a call message is delivered through a push channel. It may be understood that, in this embodiment of this application, when the call message is delivered through the push channel, the VoIP application is not running in a background. Before the terminal device receives the call message from a calling party, the terminal device may present a lock screen interface, or may present a non-lock-screen interface (for example, a desktop or a running interface of another application other than the VoIP application). In the foregoing embodiment, an example in which the terminal device presents the lock screen interface is used. When the terminal device presents the non-lock-screen interface, the desktop is used as an example. As shown in FIG. 12(3), the terminal device may present a desktop 1220, where an incoming voice call notification 1221 may be displayed on the desktop 1220. As shown in FIG. 12(4), the terminal device may present a desktop 1230, where an incoming video call notification 1231 may be displayed on the desktop 1230. Both the incoming voice call notification 1221 and the incoming video call notification 1231 may be in a notification center.

Because the incoming video call notification 1231 is presented on the non-lock-screen interface, the incoming video call notification 1231 allows the user to answer without unlocking. For example, when the user performs an answer operation through the answer key in the incoming video call notification 1231, in response to the answer operation, the terminal device may directly present the interface 1510 shown in FIG. 15(2), or directly present the video image 1520 shown in FIG. 15(3), and the like.

For descriptions of controls or information in the incoming voice call notification 1221 and the incoming video call notification 1231, refer to descriptions of corresponding controls or information in FIG. 12(1) and FIG. 12(2). For display of the incoming voice call notification 1221 and the incoming video call notification 1231, and implementations of answering, rejecting, and the like through the incoming voice call notification 1221 and the incoming video call notification 1231, refer to implementations of the incoming call notification shown in FIG. 12(1) and FIG. 12(2).

The following describes a call process in which a call message is delivered through a persistent connection. It may be understood that, in this embodiment of this application, when the call message is delivered through the push channel, the VoIP application is running in a foreground. Before the terminal device receives the call message from the calling party, the terminal device may present any running interface of the VoIP application.

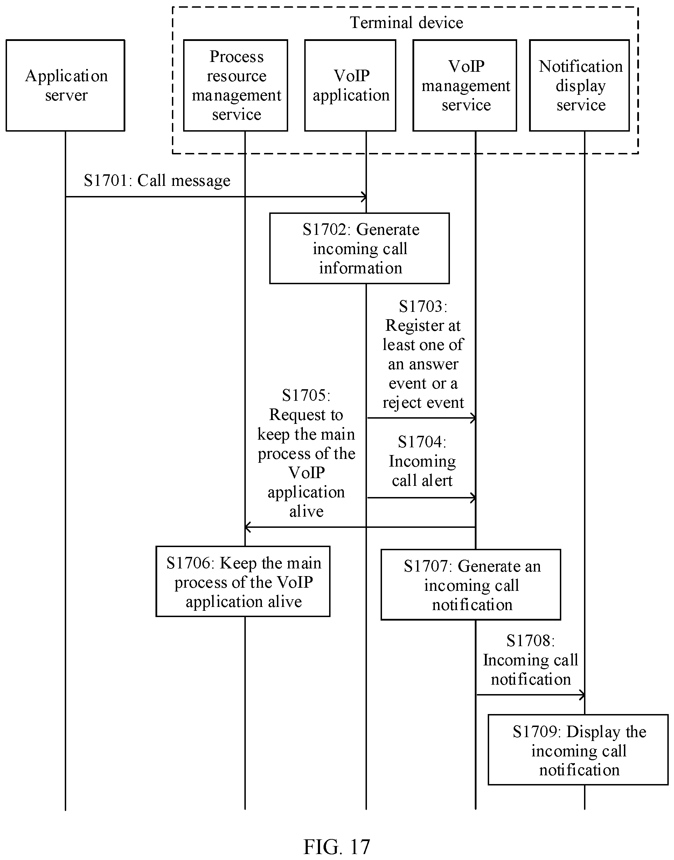

In the persistent connection scenario, FIG. 17 is a schematic flowchart of another call method according to an embodiment of this application. As shown in FIG. 17, the method includes the following steps.

S1701: An application server delivers a call message to a VoIP application through a persistent connection channel. Correspondingly, the VoIP application receives the call message from the application server.

The persistent connection channel may be a channel of a persistent connection established between the VoIP application and the application server when the VoIP application is running in a foreground.

S1702: The VoIP application generates incoming call information.

S1703: The VoIP application registers at least one of an answer event or a reject event with a VoIP management service.

S1704: The VoIP application makes an incoming call alert to the VoIP management service. Correspondingly, the VoIP management service receives the incoming call alert from the VoIP application.

S1705: The VoIP management service serves as a proxy for the VoIP application to request a process resource management service to keep a main process of the VoIP application alive.

In the solution shown in FIG. 17, although there is no freeze timer, the main process of the VoIP application may be frozen for various reasons, such as the VoIP application being switched to background running. Through performing of step S1705, the main process of the VoIP application may be included, so that the main process of the VoIP application can be active normally in an incoming call process and an ongoing call process.

S1706: The process resource management service keeps the main process of the VoIP application alive.

S1707: The VoIP management service generates an incoming call notification.

S1708: The VoIP management service sends the incoming call notification to a notification display service. Correspondingly, the notification display server receives the incoming call notification from the VoIP management service.

S1709: The notification display service displays the incoming call notification.

For descriptions of the steps shown in FIG. 17, refer to descriptions of corresponding steps shown in FIG. 10A and FIG. 10B.

Currently, the incoming call information displayed when the VoIP application is running in the foreground is displayed by the VoIP application itself, and the incoming call information is an in-application notification that includes caller information, an answer key, and a reject key. When the VoIP application is running in the background, the incoming call information displayed is displayed by a device system, and the incoming call information is a general notification message or a full-screen incoming call interface. Display entries and styles in the two scenarios are different. However, in the solutions provided in embodiments of this application, as shown in FIG. 10A and FIG. 10B, and FIG. 17, display entries (for example, a lock screen interface or a notification center) and display styles (for example, both are non-full-screen incoming call notifications, and both include caller information, an answer key, a reject key, and the like) in the two scenarios are unified. In addition, in the solutions provided in embodiments of this application, a system service serves as a proxy for the VoIP application to perform keep-alive in an incoming call notification process and an ongoing call process, without requiring the VoIP application itself to perform a keep-alive operation.

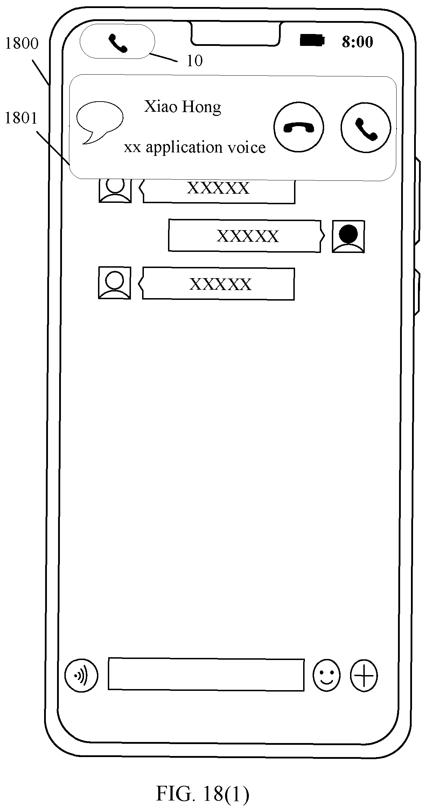

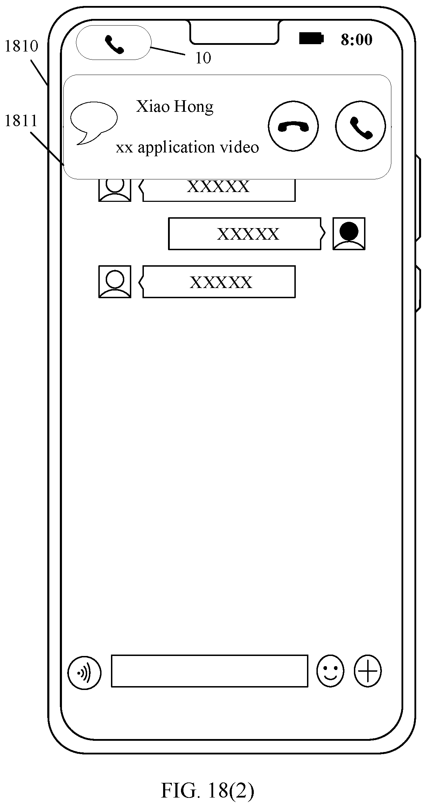

For example, in the persistent connection scenario, the incoming call notification may be an incoming voice call notification 1801 (which may be used as an example of a second incoming call notification message) presented in an interface 1800 (which may be used as an example of a fourth interface) shown in FIG. 18(1), or may be an incoming video call notification 1811 presented in an interface 1810 (which may be used as an example of the fourth interface) shown in FIG. 18(2). The incoming voice call notification 1801 and the incoming video call notification 1811 may be presented in the notification center. It may be understood that both the interface 1800 and the interface 1810 are running interfaces of the VoIP application. In this embodiment of this application, an example in which the running interface is a chat interface is used. The running interface may alternatively be another interface, such as a main interface, a moments interface, or various other running interfaces.

Similarly, in this scenario, the incoming video call notification 1811 may also allow the user to answer without unlocking. For descriptions of the incoming call notification shown in FIG. 18(1) and FIG. 18(2), refer to related descriptions shown in FIG. 12(1) to FIG. 12(4).

Optionally, for an answering procedure and a rejecting procedure in the persistent connection scenario, refer to related implementations in the push channel scenario.

Based on the incoming call notification provided in this embodiment of this application, not only can answering without unlocking be supported to simplify the answer operation and improve connection efficiency, but the incoming call notification can also be distinguished from a native call interface of a system, to avoid misleading the user.

In some embodiments, in addition to presenting the foregoing notification, the terminal device may further present prompt information of a VoIP call. The prompt information may not be affected by whether the VoIP application is running in the foreground. In other words, regardless of whether the VoIP application is running in the foreground, the terminal device may continuously present the prompt information of the VoIP call. Based on the prompt information provided in this embodiment of this application, a manner of prompting a call progress in an answering process of the VoIP application can be unified, thereby improving user experience.

In a possible implementation, the prompt information of the VoIP call includes at least one of an incoming call prompt and an in-call prompt. Optionally, the incoming call prompt, the in-call prompt, and the like may be presented in a capsule style within a status bar, or certainly may be presented in another form, or may be presented in an area included in all running interfaces other than the status bar. For example, the incoming call prompt may be used to prompt the user that the incoming call is an incoming call of the VoIP application (or referred to as a VoIP incoming call), for example, an incoming call prompt 10 shown in FIG. 12(1) to FIG. 12(4), FIG. 15(1), FIG. 15(2), FIG. 18(1) and FIG. 18(2), and the like. The in-call prompt may be used for at least one of the following: prompting the user that the incoming call is an incoming call of the VoIP application, prompting the user of a progress of the VoIP call, and the like, for example, an in-call prompt 20 shown in FIG. 14(1) to FIG. 14(4), and FIG. 15(3).

Optionally, after the terminal device presents the incoming call prompt 10, if it is detected that the user performs an answer operation, in response to the answer operation and upon successful answering, the terminal device may convert the incoming call prompt 10 into the in-call prompt 20.

In some embodiments, the prompt information may support a user operation.

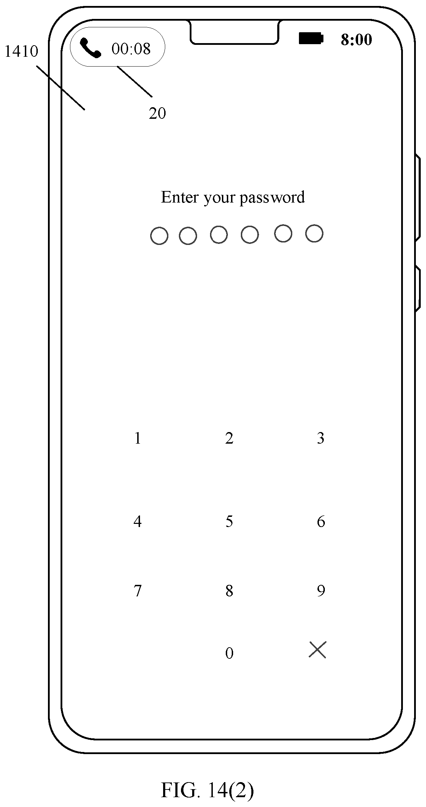

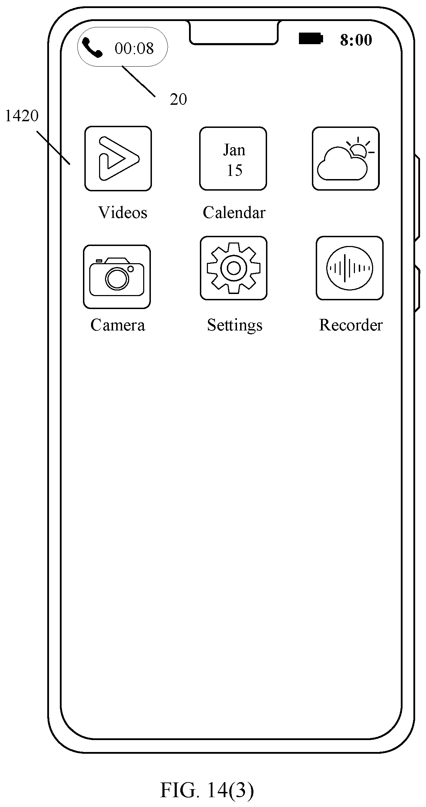

For example, with reference to the lock screen interface 1200 shown in FIG. 14(1), when the user performs an unlock operation on the lock screen interface 1200, for example, performs various unlock operations such as tapping an area other than the in-call notification 1401 or swiping up from the bottom, in response to the operation, the terminal device may present a password interface 1410 (which may be used as an example of prompting the user to unlock the terminal device) as shown in FIG. 14(2). The user may enter a password in the password interface 1410 to unlock the terminal device. Upon successful unlocking, the terminal device may jump to a desktop 1420 (which may be used as an example of a second interface) as shown in FIG. 14(3). The in-call prompt 20 (which may be used as an example of a first prompt message) is displayed on the lock screen interface 1200, the password interface 1410, and the desktop 1420.

It may be understood that, in FIG. 14(3), an example in which the desktop is last presented by the terminal device before screen locking is used. In another embodiment, if another running interface other than the desktop is last presented by the terminal device before screen locking, upon unlocking of the lock screen interface 1200 as shown in FIG. 14(1), the terminal device may alternatively present the another running interface in which the in-call prompt 20 is displayed.

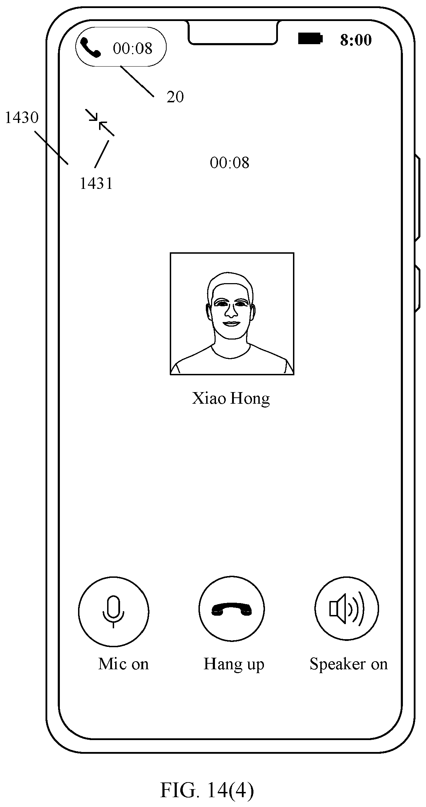

When the user performs an open operation, such as tapping, on the in-call notification 1401 in the lock screen interface 1200 as shown in FIG. 14(1), in response to the operation, the terminal may alternatively present the password interface 1410 as shown in FIG. 14(2). After the user unlocks the terminal device, in response to an unlock operation of the user, the terminal device may present a full-screen call interface 1430 as shown in FIG. 14(4). The in-call prompt 20 is also displayed on the full-screen call interface 1430.

The user may implement switching between the desktop 1420 shown in FIG. 14(3) and the full-screen call interface 1430 shown in FIG. 14(4) through the in-call prompt 20. For example, when the terminal device detects a tap operation performed by the user on the in-call prompt 20 shown in FIG. 14(3), in response to the operation, the terminal device may present the full-screen call interface 1430 (which may be used as an example of the third interface) shown in FIG. 14(4).

Alternatively, the user may implement switching between the lock screen interface 1200 shown in FIG. 14(1) and the full-screen call interface 1430 shown in FIG. 14(4) through the in-call prompt 20. For example, the terminal device detects a tap operation performed by the user on the in-call prompt 20 shown in FIG. 14(1), and in response to the operation, the terminal device may alternatively present the password interface 1410 shown in FIG. 14(2) to prompt the user to unlock the device. After the user successfully unlocks the terminal device, in response to unlocking by the user, the terminal device may present the full-screen call interface 1430 as shown in FIG. 14(4).

Optionally, the full-screen call interface 1430 shown in FIG. 14(4) may further include a key 1431. The terminal device detects a tap operation performed by the user on the key 1431, and in response to the operation, the terminal device may hide the full-screen call interface 1430. For example, the terminal device may return to the desktop 1420 as shown in FIG. 14(3).

In the foregoing example, the answer operation is performed through the incoming call notification in the lock screen scenario. Similarly, when the answer operation is performed through the incoming call notification in a notification center scenario, switching between an interface including the incoming call notification and the full-screen call interface may also be implemented. For example, when the user performs the answer operation through the answer key in the incoming call notification 1221 as shown in FIG. 12(3), in response to the operation, the terminal device may present the desktop 1420 as shown in FIG. 14(3). Subsequently, switching between the desktop 1420 shown in FIG. 14(3) and the full-screen call interface 1430 shown in FIG. 14(4) may be implemented through the in-call prompt 20. A same principle applies to the incoming call notification 1801 shown in FIG. 18(1).

The foregoing uses the voice call scenario as an example. Optionally, a video call scenario is similar, and in response to a user operation on the in-call prompt 20, the terminal device may also implement switching between different interfaces, for example, between a video image and an interface last presented before the terminal device locks the screen, or between a video image and an interface including an incoming call notification.

In the foregoing example, the in-call prompt 20 is used as an example. In another example, through the incoming call prompt 10, the user may also implement display of a full-screen incoming call interface (for example, similar to the full-screen incoming call interface including the incoming call prompt 10 shown in FIG. 14(4)), a full-screen call interface (for example, FIG. 14(4)), a full-screen answering-in-progress interface (for example, the full-screen answering-in-progress interface including the incoming call prompt 10 shown in FIG. 15(2)), and the like.

In this embodiment, when the procedures shown in FIG. 10A and FIG. 10B, and FIG. 17 are performed, in addition to interfacing with the notification display service to display the incoming call notification, the VoIP management service may further interface with the notification display service to display prompt information of the VoIP call. For example, in the incoming call alert stage shown in FIG. 10B, the VoIP management service may interface with the notification display service to display the incoming call prompt 10. For another example, in the answering scenario shown in FIG. 13, the VoIP application may further report the answer success event to the VoIP management service, and the VoIP management service may further interface with the notification display service to update the incoming call prompt 10 to the in-call prompt 20. Similarly, in the scenario shown in FIG. 16, the VoIP management service may further interface with the notification display service to delete the incoming call prompt 10.

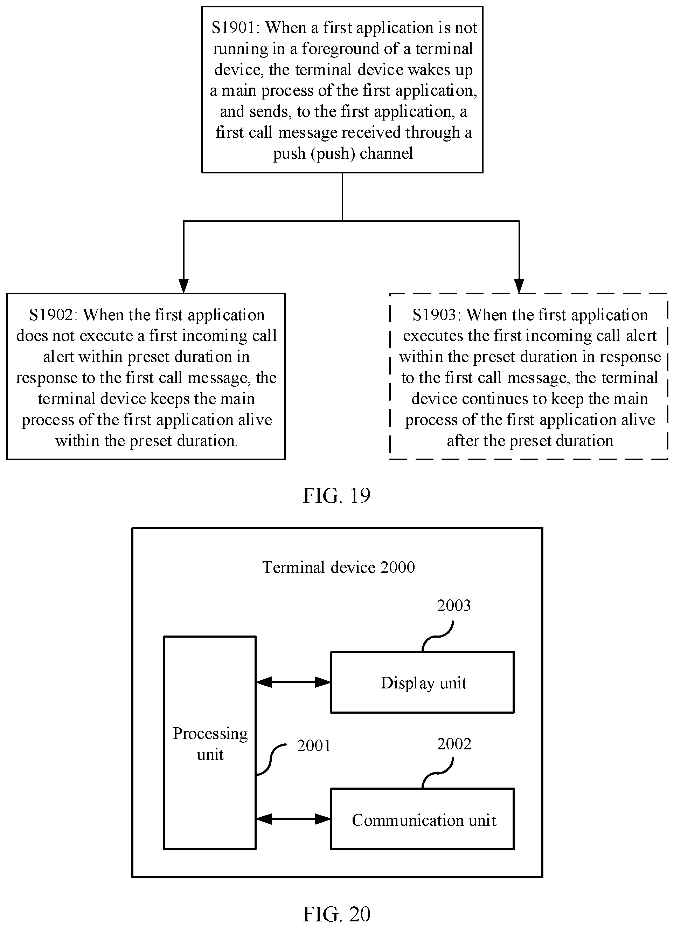

For example, FIG. 19 is a schematic flowchart of another call method according to an embodiment of this application. The method may be applied to a terminal device, and a first application having a VoIP call function, such as the VoIP application described above, is installed on the terminal device. For example, as shown in FIG. 19, the method includes the following steps.

S1901: When the first application is not running in a foreground of the terminal device, the terminal device wakes up a main process of the first application, and sends, to the first application, a first call message received through a push channel.

The first call message (a call message in the process shown in FIG. 10A) is used to implement a first VoIP call. For implementations of the first call message, refer to related implementations of the call message shown in FIG. 10A.

In some embodiments, the terminal device includes the push end described above, the push end may be used to transmit a call message, and step S1901 may be performed by the push end.

S1902: When the first application does not execute a first incoming call alert within preset duration in response to the first call message, the terminal device keeps the main process of the first application alive within the preset duration.

The first incoming call alert is used to output a first incoming call notification message for prompting a user. For example, the preset duration may be a specified time described above, the first incoming call alert may be the incoming call alert shown in FIG. 10A and FIG. 10B, and the first notification message may be the incoming call notification shown in FIG. 10A and FIG. 10B.

In some embodiments, that the terminal device keeps the main process of the first application alive within the preset duration may be specifically implemented as follows: The terminal device keeps the main process of the first application alive within the preset duration following a moment of waking up the main process of the first application, and freezes the main process of the first application at a moment that meets the preset duration from the moment of waking up the main process of the first application.

In some embodiments, the terminal device includes the process resource management service described above, and the terminal device may implement, by using the push end and the process resource management service, an operation of keeping the main process of the first application alive within the preset duration.

In a possible implementation, the push end sends a first request to the process resource management service. The first request indicates the process resource management service to keep the main process of the first application alive within the preset duration. The process resource management service keeps the main process of the first application alive within the preset duration in response to the first request. Optionally, the first request may be implemented as one or more requests.

For example, the first request is implemented as a plurality of requests. The push end may send a first keep-alive request to the process resource management service. The first keep-alive request indicates the process resource management service to keep the main process of the first application alive, as shown in step S1003 in FIG. 10A. The push end sends a first freeze request to the process resource management service at a moment that meets the preset duration from the moment of waking up the main process of the first application. The first freeze request indicates the process resource management service to freeze the main process of the first application, as shown in step S1006 in FIG. 10A. Correspondingly, the process resource management service keeps the main process of the first application alive within the preset duration in response to the first keep-alive request and the first freeze request, as shown in step S1004 and step S1006 in FIG. 10A.

In some embodiments, the method shown in FIG. 19 may further include step S1903.

S1903: When the first application executes the first incoming call alert within the preset duration in response to the first call message, the terminal device continues to keep the main process of the first application alive after the preset duration.

In some embodiments, the terminal device includes the push end, the process resource management service, and the VoIP management service described above. The VoIP management service may be used to receive an incoming call alert. For descriptions of the push end and the process resource management service, refer to the foregoing corresponding descriptions. The terminal device may implement, by using the push end, the process resource management service, and the VoIP management service, an operation of continuing to keep the main process of the first application alive after the preset duration.

In a possible implementation, the push end sends the first keep-alive request to the process resource management service. The first keep-alive request indicates the process resource management service to keep the main process of the first application alive, as shown in step S1003 in FIG. 10A. The process resource management service keeps the main process of the first application alive in response to the first keep-alive request, as shown in step S1004 in FIG. 10A. The first application executes the first incoming call alert to the VoIP management service within the preset duration in response to the first call message, as shown in step S1010 in FIG. 10B. The VoIP management service sends a second keep-alive request to the process resource management service in response to the first incoming call alert. The second keep-alive request indicates the process resource management service to keep the main process of the first application alive, as shown in step S1011 in FIG. 10B. The push end sends the first freeze request to the process resource management service at a moment that meets the preset duration from the moment of waking up the main process of the first application. The first freeze request indicates the process resource management service to freeze the main process of the first application, as shown in step S1006 in FIG. 10A. The process resource management service continues to keep the main process of the first application alive within the preset duration and after the preset duration in response to the second keep-alive request and the first freeze request.

In some embodiments, the terminal device further includes the notification display service described above, and the notification display service may be used to display the incoming call notification message of the first application. After the first application executes the first incoming call alert to the VoIP management service within the preset duration in response to the first call message, the VoIP management service sends the first incoming call notification message of the first application to the notification display service in response to the first incoming call alert, as shown in step S1013 in FIG. 10B. The notification display service displays the first incoming call notification message on the terminal device, as shown in step S1014 in FIG. 10B. For example, the first incoming call notification message may be the incoming call notification message shown in FIG. 12(1) to FIG. 12(4).

In some embodiments, when the first application is running in the foreground of the terminal device, the first application executes a second incoming call alert (the incoming call alert shown in FIG. 17) to the VoIP management service in response to a second call message (the call message shown in FIG. 17) received through a persistent connection. The VoIP management service sends a second incoming call notification message (the incoming call notification shown in FIG. 17) of the first application to the notification display service in response to the second incoming call alert, as shown in step S1708 in FIG. 17. The notification display service displays the second incoming call notification message on the terminal device, as shown in step S1709 in FIG. 17.

The foregoing mainly describes the solutions provided in embodiments of this application from the perspective of the methods. It may be understood that, to implement the foregoing functions, the terminal device includes a corresponding hardware structure and/or software module for performing the functions. With reference to the units and algorithm steps described in embodiments disclosed in this application, embodiments of this application can be implemented in a form of hardware or a combination of hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in embodiments of this application.

In embodiments of this application, the terminal device may be divided into functional modules based on the foregoing method examples. For example, each functional module may be obtained through division based on each corresponding function, or two or more functions may be integrated into one processing unit. The integrated unit may be implemented in a form of hardware, or may be implemented in a form of a software functional module. It should be noted that unit division in embodiments of this application is an example, and is merely logical function division. During actual implementation, another division manner may be used.

FIG. 20 is a diagram of a structure of a terminal device according to an embodiment of this application. The terminal device 2000 may be configured to implement the methods performed by the terminal device described in the foregoing method embodiments. For example, the terminal device 2000 may include a processing unit 2001, a communication unit 2002, and a display unit 2003.

The processing unit 2001 is configured to support the terminal device 2000 in performing the processing function described in any one of FIG. 1 to FIG. 19. The communication unit 2002 is configured to support the terminal device 2000 in performing the communication function described in any one of FIG. 1 to FIG. 19. The display unit 2003 is configured to support the terminal device 2000 in performing the display function described in any one of FIG. 1 to FIG. 19.

Optionally, the terminal device 2000 shown in FIG. 20 may further include a storage unit (not shown in FIG. 20), and the storage unit stores a program or instructions. When the processing unit 2001 executes the program or the instructions, the terminal device 2000 shown in FIG. 20 is enabled to perform the method in the foregoing method embodiments.

For technical effects of the terminal device 2000 shown in FIG. 20, refer to the technical effects in the foregoing method embodiments. Details are not described herein. The processing unit 2001 in the terminal device 2000 shown in FIG. 20 may be implemented by a processor or a processor-related circuit component, and may be a processor or a processing module. The communication unit 2002 may be implemented by a transceiver or a transceiver-related circuit component, and may be a transceiver or a transceiver module. The display unit 2003 may be implemented by a display-related component.

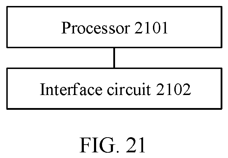

An embodiment of this application further provides a chip system. As shown in FIG. 21, the chip system includes at least one processor 2101 and at least one interface circuit 2102. The processor 2101 and the interface circuit 2102 may be interconnected through a line. For example, the interface circuit 2102 may be configured to receive a signal from another apparatus. For another example, the interface circuit 2102 may be configured to send a signal to another apparatus (for example, the processor 2101). For example, the interface circuit 2102 may read instructions stored in a memory, and send the instructions to the processor 2101. When the instructions are executed by the processor 2101, a terminal device is enabled to perform the steps performed by the terminal device in the foregoing embodiments. Certainly, the chip system may further include another discrete component. This is not specifically limited in this embodiment of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the method disclosed with reference to embodiments of this application may be directly performed by a hardware processor, or may be performed by using a combination of hardware in the processor and a software module.

An embodiment of this application further provides a computer storage medium. The computer storage medium stores computer instructions. When the computer instructions are run on a terminal device, the terminal device is enabled to perform the method in the foregoing method embodiments.

An embodiment of this application provides a computer program product. The computer program product includes a computer program or instructions. When the computer program or the instructions are run on a computer, the computer is enabled to perform the method in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the method in the foregoing method embodiments.

The terminal device, the computer storage medium, the computer program product, or the chip provided in embodiments each is configured to perform the corresponding method provided above. Therefore, for beneficial effects that can be achieved by the terminal device, the computer storage medium, the computer program product, or the chip, refer to the beneficial effects of the corresponding method provided above. Details are not described herein again.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. Embodiments may be combined or referenced with each other without conflict. The described apparatus embodiment is merely an example. For example, division into the modules or the units is merely logical function division. During actual implementation, another division manner may be used. For example, a plurality of units or components may be combined or integrated into another apparatus, or some features may be ignored or not performed. In addition, the mutual couplings or direct couplings or communication connections shown or discussed may be indirect couplings or communication connections through some interfaces, apparatuses, or units, and may be in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be embodied in a form of a software product. The software product is stored in a storage medium and includes several instructions that cause a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A call method, applied to a terminal device, wherein a first application having a VoIP call function is installed on the terminal device, and the method comprises:
when the first application is not running in a foreground of the terminal device, waking up, by the terminal device, a main process of the first application, and sending, to the first application, a first call message received through a push channel, wherein the first call message is used to implement a first VoIP call; and
when the first application does not execute a first incoming call alert within preset duration in response to the first call message, keeping, by the terminal device, the main process of the first application alive within the preset duration, wherein the first incoming call alert is used to output a first incoming call notification message for prompting a user.

2. The method according to claim 1, wherein the method further comprises:
continuing, by the terminal device when the first application executes the first incoming call alert within the preset duration in response to the first call message, to keep the main process of the first application alive after the preset duration.

3. The method according to claim 1 or 2, wherein the terminal device comprises a push end, and the push end is used to transmit a call message; and
waking up, by the terminal device, the main process of the first application, and sending, to the first application, the first call message received through the push channel comprise:
waking up, by the push end, the main process of the first application, and sending, to the first application, the first call message received through the push channel.

4. The method according to claim 3, wherein the terminal device further comprises a process resource management service, and the process resource management service is used to keep alive and freeze the main process of the first application; and
keeping, by the terminal device, the main process of the first application alive within the preset duration comprises:
sending, by the push end, a first request to the process resource management service, wherein the first request indicates the process resource management service to keep the main process of the first application alive within the preset duration; and
keeping, by the process resource management service, the main process of the first application alive within the preset duration in response to the first request.

5. The method according to claim 4, wherein
sending, by the push end, the first request to the process resource management service comprises:
sending, by the push end, a first keep-alive request to the process resource management service, wherein the first keep-alive request indicates the process resource management service to keep the main process of the first application alive; and
sending, by the push end, a first freeze request to the process resource management service at a moment that meets the preset duration, wherein the first freeze request indicates the process resource management service to freeze the main process of the first application; and
keeping, by the process resource management service, the main process of the first application alive within the preset duration in response to the first request comprises:
keeping, by the process resource management service, the main process of the first application alive within the preset duration in response to the first keep-alive request and the first freeze request.

6. The method according to claim 2, wherein the terminal device comprises a push end, a process resource management service, and a VoIP management service, the push end is used to transmit a call message, the process resource management service is used to keep alive and freeze the main process of the first application, and the VoIP management service is used to receive an incoming call alert; and
continuing, by the terminal device when the first application executes the first incoming call alert within the preset duration in response to the first call message, to keep the main process of the first application alive after the preset duration comprises:
sending, by the push end, a first keep-alive request to the process resource management service, wherein the first keep-alive request indicates the process resource management service to keep the main process of the first application alive;
keeping, by the process resource management service, the main process of the first application alive in response to the first keep-alive request;
executing, by the first application, the first incoming call alert to the VoIP management service within the preset duration in response to the first call message;
sending, by the VoIP management service, a second keep-alive request to the process resource management service in response to the first incoming call alert, wherein the second keep-alive request indicates the process resource management service to keep the main process of the first application alive;
sending, by the push end, a first freeze request to the process resource management service at a moment that meets the preset duration, wherein the first freeze request indicates the process resource management service to freeze the main process of the first application; and
continuing, by the process resource management service, to keep the main process of the first application alive within the preset duration and after the preset duration in response to the second keep-alive request and the first freeze request.

7. The method according to claim 6, wherein the terminal device further comprises a notification display service, the notification display service is used to display an incoming call notification message of the first application, and after executing, by the first application, the first incoming call alert to the VoIP management service within the preset duration in response to the first call message, the method further comprises:
sending, by the VoIP management service, the first incoming call notification message of the first application to the notification display service in response to the first incoming call alert; and
displaying, by the notification display service, the first incoming call notification message on the terminal device.

8. The method according to claim 7, wherein the method further comprises:
when the first application is running in the foreground of the terminal device, executing, by the first application, a second incoming call alert to the VoIP management service in response to a second call message received through a persistent connection;
sending, by the VoIP management service, a second incoming call notification message of the first application to the notification display service in response to the second incoming call alert; and
displaying, by the notification display service, the second incoming call notification message on the terminal device.

9. The method according to claim 7 or 8, wherein the first incoming call notification message and the second incoming call notification message have a same style.

10. The method according to claim 9, wherein the first incoming call notification message and the second incoming call notification message are not displayed in full screen, and both the first incoming call notification message and the second incoming call notification message comprise caller information, an answer key, and a reject key.

11. The method according to claim 10, wherein the first incoming call notification message is displayed on a lock screen interface of the terminal device with a lock screen password set, and the first incoming call notification message supports the user in answering an incoming call of the first application without unlocking the terminal device.

12. The method according to any one of claims 7 to 11, wherein the method further comprises:
displaying, by the notification display service, a prompt message in a status bar of the terminal device, wherein the prompt message is used to prompt that an incoming call type corresponding to the first incoming call notification message is a VoIP incoming call.

13. A call method, applied to a terminal device, wherein a first application having a VoIP call function is installed on the terminal device, and the method comprises:
displaying, by the terminal device, a first interface, wherein the first interface is a lock screen interface with a lock screen password set, a first incoming call notification message of the first application is displayed on the first interface, the first incoming call notification message occupies a part of an area of the first interface, and the first incoming call notification message comprises a first answer key;
receiving, by the terminal device, a trigger operation on the first answer key; and
in response to the trigger operation, connecting, by the terminal device when the terminal device is not unlocked, a first VoIP call corresponding to the first incoming call notification message.

14. The method according to claim 13, wherein the first incoming call notification message is an incoming voice call notification message or an incoming video call notification message, and the first VoIP call is a voice call.

15. The method according to claim 13, wherein the first incoming call notification message is an incoming video call notification message, the first incoming call notification message further comprises a second answer key, and the method further comprises:
receiving, by the terminal device, a trigger operation on the second answer key;
prompting, by the terminal device in response to the trigger operation on the second answer key, a user to unlock the terminal device; and
connecting, by the terminal device when the terminal device is successfully unlocked, a second VoIP call corresponding to the first incoming call notification message, wherein the second VoIP call is a video call.

16. The method according to any one of claims 13 to 15, wherein after connecting, by the terminal device, the first VoIP call corresponding to the first incoming call notification message, the method further comprises:
receiving, by the terminal device, an unlock operation on the terminal device; and
displaying, by the terminal device, a second interface and a first prompt message in response to the unlock operation, wherein the second interface is an interface last displayed before the terminal device locks a screen, the first prompt message is located in a status bar, and the first prompt message is used to prompt that an incoming call type of the first VoIP call is a VoIP incoming call and/or prompt a progress of the first VoIP call.

17. The method according to claim 16, wherein after displaying, by the terminal device, the second interface and the first prompt message, the method further comprises:
receiving, by the terminal device, a trigger operation on the first prompt message; and
displaying, by the terminal device, a third interface and the first prompt message in response to the trigger operation, wherein the third interface is a voice call interface displayed in full screen.

18. The method according to any one of claims 13 to 17, wherein after connecting, by the terminal device, the first VoIP call corresponding to the first incoming call notification message, the method further comprises:
receiving, by the terminal device, a trigger operation on the first incoming call notification message;
in response to the trigger operation on the first incoming call notification message, prompting, by the terminal device, the user to unlock the terminal device; and
displaying, by the terminal device, the third interface and the first prompt message when the terminal device is successfully unlocked, wherein the third interface is a full-screen voice call interface, the first prompt message is located in the status bar, and the first prompt message is used to prompt that the incoming call type of the first VoIP call is the VoIP incoming call and/or prompt the progress of the first VoIP call.

19. The method according to any one of claims 13 to 18, wherein the method further comprises:
displaying, by the terminal device, a fourth interface, wherein the fourth interface is a running interface of the first application, a second incoming call notification message of the first application is displayed on the fourth interface, and the second incoming call notification message is displayed in a notification center.

20. A terminal device, comprising a processor, a display, and a memory, wherein the memory and the display are coupled to the processor, the memory is configured to store program code, the program code comprises instructions, and the processor reads the instructions from the memory, so that the terminal device performs the method according to any one of claims 1 to 12, or the terminal device performs the method according to any one of claims 13 to 19.

21. A computer-readable storage medium, wherein the computer-readable storage medium comprises a computer program, and when the computer program is run on a terminal device, the terminal device is enabled to perform the method according to any one of claims 1 to 12, or the terminal device is enabled to perform the method according to any one of claims 13 to 19.

22. A computer program product, wherein the computer program product comprises a computer program or instructions, and when the computer program or the instructions are run on a computer, the computer is enabled to perform the method according to any one of claims 1 to 12, or the computer is enabled to perform the method according to any one of claims 13 to 19.
